# EUROPEAN PATENT SPECIFICATION

(11) **EP 4 152 821 B1**
(45) Date of publication and mention of the grant of the patent: **30.07.2025**
(21) Application number: 21817557.8
(22) Date of filing: 27.02.2021
(51) Int. Cl.: H04W 36/00

(54) **HANDOVER METHOD AND APPARATUS**
ÜBERGABEVERFAHREN UND -VORRICHTUNG
PROCÉDÉ ET APPAREIL DE TRANSFERT CELLULAIRE

(30) Priority: 30.05.2020 CN 202010480982
(43) Date of publication of application: 22.03.2023
(73) Proprietor: Huawei Technologies Co., Ltd., Longgang District, Shenzhen, Guangdong 518129 (CN)
(72) Inventor: SUN, Fei, Shenzhen, Guangdong 518129 (CN); LUO, Haiyan, Shenzhen, Guangdong 518129 (CN); ZENG, Qinghai, Shenzhen, Guangdong 518129 (CN)
(74) Representative: Körber, Martin Hans
(86) International application number: PCT/CN2021/078307
(87) International publication number: WO 2021/244078

(56) References cited:
- EP-A1- 3 528 526
- EP-A1- 3 709 711
- WO-A1-2019/137471
- CN-A- 108 924 884
- CN-A- 110 035 461
- CN-A- 110 754 114
- US-A1- 2019 037 409
- ERICSSON: "Mobility and Mapping of NW slices", vol. RAN WG3, no. Athens, Greece; 20170213 - 20170217, 6 February 2017 (2017-02-06), XP051224187, Retrieved from the Internet <URL:http://www.3gpp.org/ftp/tsg_ran/WG3_Iu/TSGR3_95/Docs/> [retrieved on 20170206]
- ZTE: "Selection RAN Part Network Slice during UE mobility", vol. RAN WG3, no. Spokane, USA; 20170117 - 20170119, 7 January 2017 (2017-01-07), XP051212689, Retrieved from the Internet <URL:http://www.3gpp.org/ftp/Meetings_3GPP_SYNC/RAN3/Docs/> [retrieved on 20170107]
- ZTE: "Further Discussion and 38.300 TP on Slice Aware Mobility", 3GPP DRAFT; R3-181687 FURTHER DISCUSSION AND 38.300 TP ON SLICE AWARE MOBILITY V3, vol. RAN WG3, 5 April 2018 (2018-04-05), Sanya, China, pages 1 - 5, XP051416599

## Description

### TECHNICAL FIELD

This application relates to the field of communication technologies, and in particular, to a handover method and apparatus.

### BACKGROUND

With the development of mobile communication technologies, various new services and application scenarios continuously emerge, and requirements of different services on aspects such as network functions, connection performance, and security vary greatly. If a single network is used to carry these services, it is hardy to satisfy requirements for a high bandwidth, a low delay, and high reliability at the same time. However, building a new network for each type of service brings huge costs. The 5th generation (5th generation, 5G) wireless communication technology has become a hot topic in the industry. To satisfy the foregoing requirements, 5G is required to be flexible and scalable and satisfy different service requirements. Therefore, in 5G, an end-to-end network slice (network slice) is used to provide users with customized network services. Specifically, through flexible allocation of network resources and on-demand networking, a plurality of isolated logical networks with different characteristics are virtualized on one physical infrastructure in 5G, to provide customized services for users.

In a conventional cellular network, when a terminal device in connected mode moves from a source radio access network (radio access network, RAN) node to a target RAN node, a communication service of the terminal device also needs to be handed over to the target RAN node. In a 5G network, because functions of RAN nodes of different vendors may vary, or an operator has a regional policy for network slice deployment, different RAN nodes have different support capabilities for network slices. Therefore, network slice services supported within coverage of the RAN nodes are also different. For example, a network slice supported by one RAN node may be different from a network slice supported by another RAN node. In this case, as the terminal device moves, a network slice connected to the terminal device used when the terminal device communicates with the source RAN node may not be supported by the target RAN node. During handover of the terminal device, how to hand over the terminal device with low signaling overheads while ensuring service continuity is a problem to be resolved in this application.

WO 2019/137471 A1 and EP 3 709 711 A1 disclose a communication method comprising: a first access network obtains, from a terminal device, information of a correspondence between the session of the terminal device and a network slice; the first access network device sends the information of the correspondence to a second access network device. The first access network obtains a correspondence between a session and a network slice, and sends said correspondence to a second access network device.

### SUMMARY

Embodiments of this application provide a handover method and apparatus, to resolve a problem of large high signaling overheads in a handover interaction procedure.

To achieve the foregoing objectives, the following technical solutions are used in embodiments of this application. The invention is defined in the appended claims. In the following, parts of the description and drawings referring to embodiments which are not covered by the claims are not presented as embodiments of the invention, but as examples useful for understanding the invention.

During handover, only an indication indicating whether a session supports network slice re-mapping and/or an indication indicating whether the session supports network slice fallback need/needs to be received from a handover message, and entire network slice re-mapping information and/or default network slice information do/does not need to be received. Therefore, this reduces signaling overheads caused during handover interaction.

### BRIEF DESCRIPTION OF DRAWINGS

FIG. 1 is a schematic architectural diagram of a communication system to which this application is applicable;
FIG. 2 is a schematic structural diagram of a handover apparatus 200 according to an embodiment of this application;
FIG. 3A and FIG. 3B are a schematic flowchart of a handover method according to an embodiment of this application;
FIG. 4A and FIG. 4B are another schematic flowchart of a handover method according to an embodiment of this application;
FIG. 5A and FIG. 5B are another schematic flowchart of a handover method according to an embodiment of this application;
FIG. 6A and FIG. 6B are another schematic flowchart of a handover method according to an embodiment of this application;
FIG. 7 is another schematic flowchart of a handover method according to an embodiment of this application;
FIG. 8 is a schematic flowchart of an example of a handover method implemented by a central unit and a distributed unit in a target RAN node;
FIG. 9A and FIG. 9B are another schematic flowchart of a handover method according to an embodiment of this application;
FIG. 10 is a schematic structural diagram of a handover apparatus 300 according to an embodiment of this application; and
FIG. 11 is a schematic structural diagram of a handover apparatus 400 according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, an enhanced long term evolution (enhanced long term evolution, e-LTE) system, a 5th generation (5th generation, 5G) system or a new radio (new radio, NR) system, or a next generation communication system, for example, a 6th generation (6th generation, 6G) system. The 5G mobile communication system in this application includes a non-standalone (non-standalone, NSA) 5G mobile communication system or a standalone (standalone, SA) 5G mobile communication system. Alternatively, the communication system may be a public land mobile network (public land mobile network, PLMN) network, a device-to-device (device-to-device, D2D) communication system, a machine to machine (machine to machine, M2M) communication system, an internet of things (internet of Things, IoT) communication system, an internet of vehicles communication system, or another communication system.

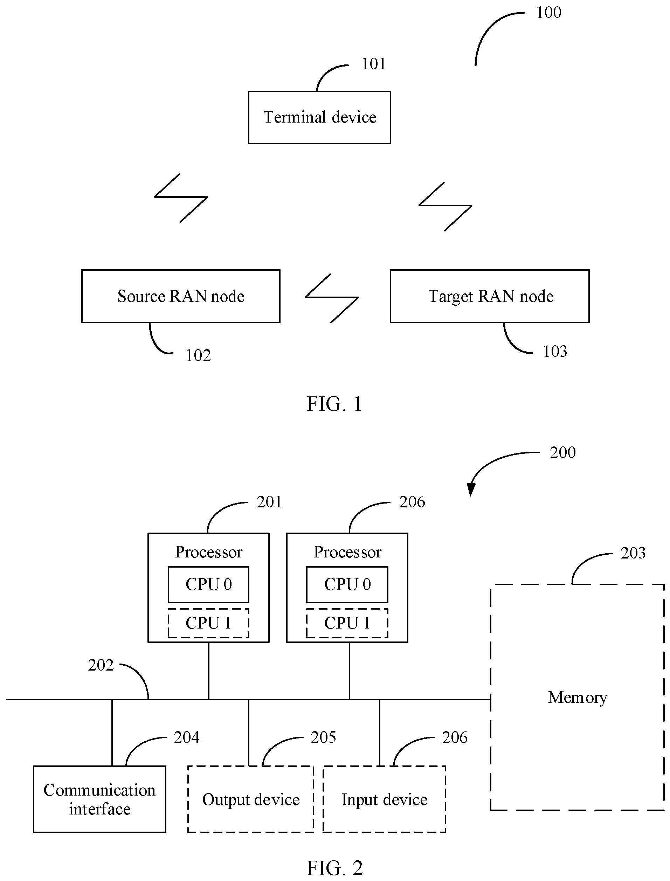

FIG. 1 is a schematic architectural diagram of a communication system to which this application is applicable. The communication system 100 includes a terminal device 101, a source RAN node 102, and a target RAN node 103. The terminal device 101, the source RAN node 102, and the target RAN node 103 may directly communicate with each other, or may communicate with each other through forwarding performed by another device. This is not specifically limited in this embodiment of this application. Although not shown, the communication system may further include another network element.

Optionally, a terminal device 101 in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved PLMN, or a terminal in a future internet of vehicles. This is not limited in embodiments of this application.

By way of example and not limitation, in embodiments of this application, the terminal device 101 may be a mobile phone, a tablet computer, a computer having a wireless transceiver function, a virtual reality terminal, an augmented reality terminal, a wireless terminal in industrial control, a wireless terminal in autonomous driving, a wireless terminal in remote surgery, a wireless terminal in a smart grid, a wireless terminal in transportation safety, a wireless terminal in a smart city, a wireless terminal in a smart home, or the like.

By way of example and not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In addition, in embodiments of this application, the terminal device 101 may alternatively be a terminal in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in embodiments of this application, the terminal device 101 may further include sensors such as a smart printer, a train detector, and a gas station. Main functions include collecting data (some terminals), receiving control information and downlink data of a RAN node, sending an electromagnetic wave, and transmitting uplink data to the RAN node.

Optionally, the source RAN node 102 or the target RAN node 103 in embodiments of this application may be any communication device that has a wireless transceiver function and that is configured to communicate with the terminal device 101. The source RAN node 102 or the target RAN node 103 includes but is not limited to: an evolved NodeB (evolved NodeB, eNB), a baseband unit (baseband unit, BBU), and an access point (access point, AP) a wireless relay node, a wireless backhaul node, a transmission point (transmission point, TP) or a transmission reception point (transmission reception point, TRP), or the like in a wireless fidelity (wireless fidelity, Wi-Fi) system. Alternatively, the RAN device may be a gNB, a TRP, or a TP in the 5G system, or one or a group of (including a plurality of antenna panels) antenna panels of a base station in the 5G system. In addition, the access network device may alternatively be a network node included in a gNB or a TP, for example, a BBU or a distributed unit (distributed unit, DU).

In some deployments, the gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the source RAN node 102 or the target RAN node 103 may be a device including one or more of a CU node, a DU node, and an AAU node.

Optionally, in this embodiment of this application, the source RAN node 102 or the target RAN node 103 and the terminal device 101 may communicate with each other by using a granted spectrum, may communicate with each other by using a grant-free spectrum, or may communicate with each other by using both a granted spectrum and a grant-free spectrum. The source RAN node 102 or the target RAN node 103 and the terminal device 101 may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the source RAN node 102 or the target RAN node 103 and the terminal device 101 is not limited in embodiments of this application.

Optionally, the terminal device 101, the source RAN node 102, or the target RAN node 103 in embodiments of this application may be deployed on land, indoors or outdoors, or may be handheld or vehicle-mounted; may be deployed on water; or may be deployed on an airplane, a balloon, or a satellite in the air. An application scenario of the terminal device 101, the source RAN node 102, or the target RAN node 103 is not limited in embodiments of this application.

Optionally, in embodiments of this application, the terminal device 101, the source RAN node 102, or the target RAN node 103 includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that process services through a process (process), for example, a Linux operating system, a Unix operating system, an Android operating system, an iOS operating system, or a Windows operating system. The application layer includes applications such as a browser, an address book, word processing software, and instant messaging software. In addition, embodiments of this application do not particularly limit a specific structure of an execution body of the methods provided in embodiments of this application, provided that a program that records code of the methods provided in embodiments of this application can be run to perform communication according to the methods provided in embodiments of this application. For example, the methods provided in embodiments of this application may be performed by the terminal device 101, the source RAN node 102, or the target RAN node 103, or a function module that is in the terminal device 101, the source RAN node 102, or the target RAN node 103 and that can invoke and execute a program.

In other words, related functions of the terminal device 101, the source RAN node 102, or the target RAN node 103 in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

For example, related functions of the terminal device, the source RAN node, or the target RAN node in embodiments of this application may be implemented by using the handover apparatus 200 in FIG. 2. FIG. 2 is a schematic structural diagram of a handover apparatus 200 according to an embodiment of this application. The handover apparatus 200 includes one or more processors 201, a communication line 202, and at least one communication interface (only an example in which the handover apparatus 200 includes a communication interface 204 and one processor 201 is used in FIG. 2 for description). Optionally, the handover apparatus 200 may further include a memory 203.

The processor 201 may be a central processing unit (central processing unit, CPU), a microprocessor, an application-specific integrated circuit (application-specific integrated circuit, ASIC), or one or more integrated circuits configured to control execution of a program in the solutions in this application.

The communication line 202 may include a path, to connect different components.

The communication interface 204 may be a transceiver module, configured to communicate with another device or a communication network, such as the Ethernet, a RAN, or a wireless local area network (wireless local area network, WLAN). For example, the transceiver module may be an apparatus such as a transceiver or a transceiver. Optionally, the communication interface 204 may alternatively be a transceiver circuit located in the processor 201, and is configured to implement signal input and signal output of the processor.

The memory 203 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that is accessible by a computer. However, the memory is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement handover methods provided in embodiments of this application.

Alternatively, in embodiments of this application, the processor 201 may implement a processing-related function in the handover methods provided in the following embodiments of this application, and the communication interface 204 may be responsible for communicating with the another device or the communication network. This is not specifically limited in embodiments of this application.

The computer-executable instructions in embodiments of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the handover apparatus 200 may include a plurality of processors, such as the processor 201 and a processor 206 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the handover apparatus 200 may further include an output device 205 and an input device 206. The output device 205 communicates with the processor 201, and may display information in a plurality of manners.

The handover apparatus 200 may be a general-purpose apparatus or a dedicated apparatus. For example, the handover apparatus 200 may be a desktop computer, a portable computer, a network server, a personal digital assistant (personal digital assistant, PDA), a mobile phone, a tablet computer, a wireless terminal, an embedded device, or a device having a similar structure in FIG. 2. A type of the handover apparatus 200 is not limited in embodiments of this application.

The following describes in detail the handover method provided in embodiments of this application with reference to FIG. 1 to FIG. 9B.

It should be noted that names of messages between network elements, names of parameters in the messages, or the like in the following embodiments of this application are merely examples, and there may alternatively be other names during specific implementation. This is not specifically limited in embodiments of this application.

In embodiments of this application, meanings of network slice re-mapping (slice re-mapping) and network slice fallback (slice fallback) are as follows:
Network slice re-mapping means that a protocol data unit (protocol data unit, PDU) session (session)/quality of service flow (quality of service flow, QoS flow)/data radio bearer (data radio bearer, DRB) performed on a network slice #1 (slice#1) may be re-mapped to a network slice #2 (slice#2). To be specific, a service of the network slice #1 may be implemented by using the network slice #2. This means a service of the network slice #1 is implemented by using a network resource of the network slice #2. The source RAN node supports the network slice #1. However, the target RAN node may not support the network slice #1, but support the network slice #2. To be specific, network slice re-mapping includes network slice re-mapping performed at a PDU session granularity, network slice re-mapping performed at a QoS flow granularity, and network slice re-mapping performed at a DRB granularity. Network slice re-mapping performed at a PDU session granularity means that a PDU session performed on a source network slice may be re-mapped to another network slice supported by the target RAN node, and the network slice for re-mapping continues to perform the PDU session. Network slice re-mapping performed at a QoS flow granularity means that a QoS flow performed on a source network slice may be re-mapped to another network slice supported by the target RAN node, and the network slice for re-mapping continues to perform a service in the QoS flow. Network slice re-mapping performed at a DRB granularity means that a DRB performed on a source network slice may be re-mapped to another network slice supported by the target RAN node, and the network slice for re-mapping continues to execute a service carried on the DRB.

Network slice fallback means that the terminal device, the source RAN node, and the target RAN node all support a specific network slice and learn of an identifier and a configuration of the specific network slice in advance. When the terminal device is handed over, a PDU session/QoS flow/DRB of the terminal device on any network slice of the source RAN node is transferred (or falls back) to the specific network slice. In other words, after the handover occurs, a PDU session/QoS flow/DRB on any network slice of the terminal device is implemented by using the specific network slice of the target RAN node, or it may be considered that any network slice of the terminal device is re-mapped to the specific network slice. Regardless of whether the target RAN node supports another network slice or which network slice is used by the terminal device on the source RAN node, when the terminal device is handed over, the target RAN node may fall back a PDU session/QoS flow/DRB on any network slice of the terminal device to the specific network slice, that is, implement a service of any network slice of the terminal device by using a network resource of the specific network slice. In this specification, in an example, the specific network slice is referred to as a default (default) network slice, and the specific network slice may also have another name. This is not limited in this application. It should be understood that the default network slice may be determined by a network side and configured for the terminal device, may be obtained after the terminal device negotiates with the network side, or may be predefined in a standard.

In other words, network slice re-mapping is to map a network slice to another network slice, and network slice fallback is to map a network slice to the default network slice. It should be noted that when the another network slice is the same as the default network slice, network slice re-mapping is equivalent to network slice fallback.

In embodiments of this application, a network slice identifier may be represented by using at least one of the following parameters:
(1) Network slice type information. For example, the network slice type information may indicate network slice types such as an enhanced mobile broadband (enhanced mobile broadband, eMBB) service, ultra-reliable low-latency communications (ultra-reliable low-latency communications, URLLC), and massive machine-type communications (massive machine-type communications, mMTC). Optionally, the network slice type information may further indicate an end-to-end network slice type, including a network slice type from a radio access network (radio access network, RAN) to a core network (core network, CN), or may be a RAN-side network slice type or a CN-side network slice type.
(2) Service type information: The service type information relates to a specific service, for example, the service type information may indicate a service feature of a video service, an internet-of-vehicles service, a voice service, and the like, or information about a specific service.
(3) Tenant (tenant) information: The tenant information indicates information about a customer that creates or rents a network slice.
(4) User group information: The user group information indicates information about a group of users who are grouped based on a specific feature such as a user level.
(5) Slice group information: The slice group information indicates a network slice group that is formed based on a characteristic, for example, all network slices that can be accessed by the terminal device are used as a slice group, or indicates a network slice group that is classified according to another standard.
(6) Network slice instance information: The network slice instance information indicates an instance identifier and feature information that are created for the network slice. For example, an identifier may be allocated to a network slice instance to indicate the network slice instance, or a new identifier associated with the network slice instance may be mapped to based on an identifier of a network slice instance, and a receiver may identify, based on the identifier, the specific network slice instance indicated by the identifier.

Dedicated core network (dedicated core network, DCN) identifier: The identifier is used to uniquely indicate a dedicated core network in an LTE system or an eLTE system, for example, a dedicated core network for the internet of things. Optionally, mapping may be performed between the DCN identifier and a network slice identifier. The network slice identifier may be obtained through mapping of the DCN identifier, and the DCN identifier may also be obtained through mapping of the network slice identifier.

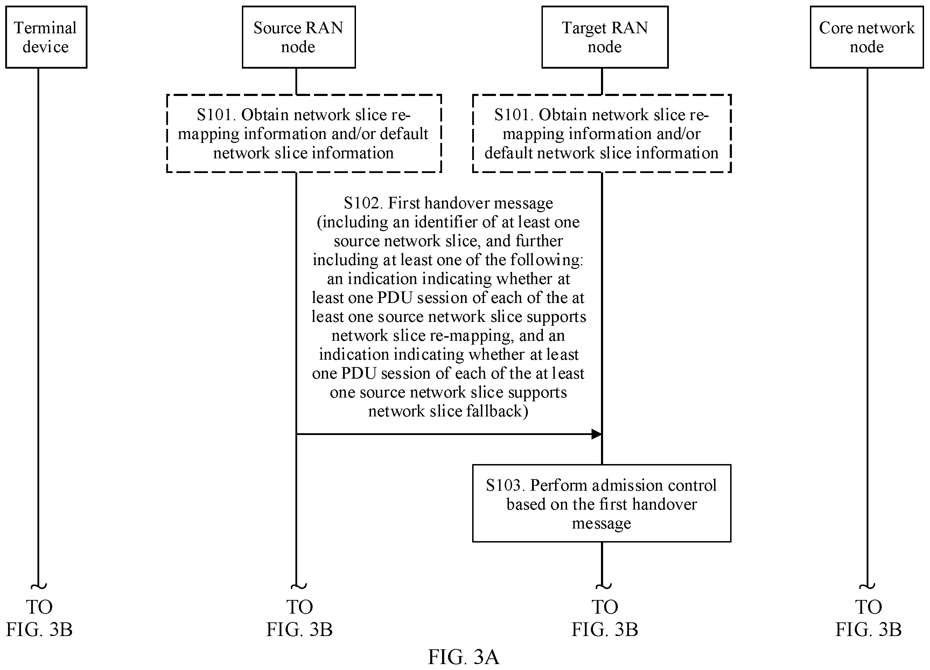

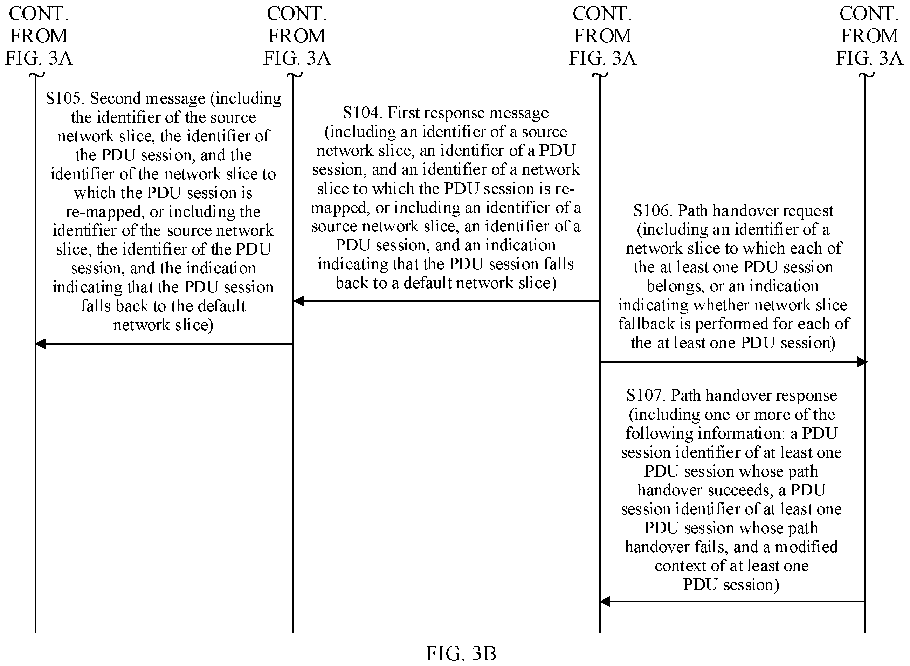

FIG. 3A and FIG. 3B are a schematic flowchart of a handover method according to an embodiment of this application. This procedure mainly relates to network slice re-mapping or fallback performed at a PDU session granularity, where the network slice re-mapping or fallback is based on Xn interface handover. For example, the method includes the following steps.

S101. A source RAN node and a target RAN node obtain network slice re-mapping information and/or default network slice information.

Before a terminal device is handed over, the source RAN node and the target RAN node may obtain the network slice re-mapping information and/or the default network slice information. In this way, during handover of the terminal device, the source RAN node does not need to resend the network slice re-mapping information and/or the default network slice information to the target RAN node. The target RAN node does not need to receive the network slice re-mapping information and/or the default network slice information again.

For example, the source RAN node receives a first message from a core network node or a network management system. The first message includes the network slice re-mapping information and/or the default network slice information. The first message may include network slice re-mapping information corresponding to identifiers of all source network slices within the coverage of the RAN node, and/or the default network slice information. The network slice re-mapping information is re-mapping information of a network slice supported by the source RAN node. Specifically, the network slice re-mapping information includes identifiers of one or more source network slice, and an identifier of a network slice to which an identifier of each source network slice can be correspondingly mapped. It should be understood that there may be one or more network slices to which a source network slice can be correspondingly re-mapped, and a network slice to which the source network slice is finally re-mapped may be determined by the target RAN node based on a priority of each network slice, load of each network slice, a performance indicator of each network slice, or another policy. For example, a correspondence between an identifier of a source network slice and an identifier of a network slice for re-mapping is shown in the following Table 1:

**Table 1**

| Identifier of the source network slice | Identifier of the network slice for re-mapping |
|---|---|
| Network slice 1 | Network slice 2 and network slice 3 |
| Network slice 4 | Network slice 5 |
| ... | ... |
| Network slice N | Network slice M1 and network slice M2 |

When handover occurs, a PDU session on a source network slice supported by the source RAN node may fall back to a default network slice for performing. The default network slice information includes an identifier of the default network slice.

The first message may be a next generation application protocol (next generation application protocol, NGAP) message. An access and mobility management function (access and mobility management function, AMF) network element may notify the source RAN node and the target RAN node of the network slice re-mapping information and/or the default network slice information by using an NGAP message.

Alternatively, the first message may be an Xn interface application protocol (Xn application protocol, XnAP) message. The RAN nodes exchange the network slice re-mapping information and/or the default network slice information by using an XnAP message.

In addition, UE may alternatively obtain the network slice re-mapping information and/or the default network slice information in advance. For example, the AMF network element may notify the UE of the network slice re-mapping information and/or the default network slice information by using a non-access stratum (non-access stratum, NAS) message. For another example, after obtaining the network slice re-mapping information and/or the default network slice information, the source RAN node may alternatively notify the UE of the network slice re-mapping information and/or the default network slice information by using a broadcast message or a radio resource control (radio resource control, RRC) message.

S102. The source RAN node sends a first handover message to the target RAN node, where the first handover message includes identifiers of one or more source network slices, an indication indicating whether one or more PDU sessions of each of the one or more source network slices support network slice re-mapping, and/or an indication indicating whether one or more PDU sessions of each of the one or more source network slices support network slice fallback.

For example, the source RAN node determines the target RAN node in one or more RAN nodes based on signal strength measurement reports of the one or more RAN nodes neighboring to the source RAN node, where the reports are reported by the UE. The target RAN node receives the first handover message.

Specifically, in the Xn interface-based handover procedure in this embodiment, the first handover message may be a handover request (handover request) message.

Before sending the first handover message to the target RAN node, the source RAN node may further receive, from the core network node, an establishment request for the PDU session. The establishment request for the PDU session includes an indication indicating whether an established PDU session supports network slice re-mapping, and/or an indication indicating whether the established PDU session supports network slice fallback. Therefore, the source RAN node may perform a subsequent operation according to the foregoing indication.

During handover of the terminal device, PDU sessions performed on one or more source network slices of the source RAN node need to be performed on the target RAN node side, to improve service continuity. However, a network slice supported by the target RAN node may be different from the source network slice. After the terminal device is handed over, the PDU session may not be performed on the source network slice, and needs to be re-mapped to a new network slice supported by the target RAN node or fall back to the default network slice for performing. For a PDU session performed on each source network slice, the source RAN node needs to indicate whether the PDU session supports network slice re-mapping and/or network slice fallback.

When a source network slice is in a one-to-one correspondence with a PDU session, in other words, when there is only one PDU session currently on one source network slice and the PDU session is to be handed over, in a possible implementation, the first handover message includes identifiers of one or more source network slices and an indication indicating whether a PDU session of each of the one or more source network slices supports network slice re-mapping, that is, for an identifier of each source network slice, the first handover message indicates whether a PDU session on the source network slice supports network slice re-mapping. Alternatively, the first handover message includes identifiers of one or more source network slices and an indication indicating whether a PDU session of each of the one or more source network slices supports network slice fallback, that is, for an identifier of each source network slice, the first handover message indicates whether a PDU session on the source network slice supports network slice fallback. Alternatively, the first handover message includes identifiers of one or more source network slices, an indication indicating whether a PDU session of each of the one or more source network slices supports network slice re-mapping, and an indication indicating whether the PDU session supports network slice fallback, that is, for an identifier of each source network slice, the first handover message indicates whether a PDU session on the source network slice supports network slice re-mapping and fallback.

In another possible implementation, the first handover message includes identifiers of one or more source network slices and an indication indicating that a PDU session of each of the one or more source network slices supports network slice re-mapping, that is, for an identifier of each source network slice, the first handover message indicates that a PDU session on the source network slice supports network slice re-mapping. Alternatively, the first handover message includes identifiers of one or more source network slices and an indication indicating that a PDU session of each of the one or more source network slices supports network slice fallback, that is, for an identifier of each source network slice, the first handover message indicates that a PDU session on the source network slice supports network slice fallback. Alternatively, the first handover message includes identifiers of one or more source network slices, an indication indicating that a PDU session of each of the one or more source network slices supports network slice re-mapping, and an indication indicating that the PDU session supports network slice fallback, that is, for an identifier of each source network slice, the first handover message indicates that a PDU session on the source network slice supports network slice re-mapping and fallback.

When a source network slice is in a one-to-many relationship with PDU sessions, in other words, when there are a plurality of PDU sessions on one source network slice and the PDU sessions are to be handed over to the target RAN node, in a possible implementation, the first handover message includes identifiers of one or more source network slices, PDU session identifiers of a plurality of PDU sessions on each of the one or more source network slices, and an indication indicating whether PDU sessions corresponding to a part or all of the PDU session identifiers support network slice re-mapping, that is, for an identifier of each source network slice, the first handover message indicates whether a part or all PDU sessions in a plurality of PDU sessions on the source network slice support network slice re-mapping. Alternatively, the first handover message includes identifiers of one or more source network slices, PDU session identifiers of a plurality of PDU sessions on each of the one or more source network slices, and an indication indicating whether PDU sessions corresponding to a part or all of the PDU session identifiers support network slice fallback, that is, for an identifier of each source network slice, the first handover message indicates whether a part or all PDU sessions in a plurality of PDU sessions on the source network slice support network slice fallback. Alternatively, the first handover message includes identifiers of one or more source network slices, PDU session identifiers of a plurality of PDU sessions on each of the one or more source network slices, an indication indicating whether PDU sessions corresponding to a part or all PDU session identifiers support network slice re-mapping, and an indication indicating whether PDU sessions corresponding to a part or all PDU session identifiers support network slice fallback, that is, for an identifier of each source network slice, the first handover message indicates whether a part or all PDU sessions in PDU sessions on the source network slice support network slice re-mapping and fallback.

It should be noted that, an indication indicating whether a PDU session supports network slice re-mapping and/or network slice fallback generally includes an identifier of the PDU session and indication information indicating whether the PDU session supports network slice re-mapping and/or network slice fallback. Similarly, an indication indicating that a PDU session supports network slice re-mapping and/or network slice fallback generally includes an identifier of the PDU session and indication information indicating that the PDU session supports network slice re-mapping and/or network slice fallback. It should be understood that the indication information may be one-bit indication information. For example, when a value of the bit is 1, it indicates that network slice re-mapping and/or network slice fallback are/is supported. When a value of the bit is 0, it indicates that network slice re-mapping and/or network slice fallback are/is not supported.

S103. The target RAN node performs admission control based on the first handover message.

For an identifier of a source network slice included in the first handover message, if the first handover message further includes an indication indicating whether one or more PDU sessions corresponding to the identifier of the source network slice support network slice re-mapping, the admission control is used to determine whether to perform network slice re-mapping on the one or more PDU sessions, and determine an identifier of a network slice to which the one or more PDU sessions are re-mapped. Specifically, for any PDU session corresponding to the source network slice, if the first handover message includes an indication indicating that the PDU session supports network slice re-mapping, the target RAN node determines, based on the network slice re-mapping information that corresponds to the identifier of the source network slice and that is obtained in step S101, to re-map the PDU session on the source network slice to a new network slice. For example, a PDU session on a source network slice (slice#1) is handed over to the target RAN node. However, the target RAN node does not support the slice #1, and network slice re-mapping information corresponding to the slice #1 includes a slice #2 and a slice #3. In this case, the target RAN node may re-map the PDU session to the slice #2 or the slice #3 according to a policy (for example, based on respective load or performance indicators of the slice #2 and the slice #3 on the target RAN node, or priorities of the slices). For another example, if the target RAN node supports the slice #1, the target RAN node may continue to perform the PDU session by using the slice #1. When load of the slice #1 of the target RAN node is excessively high, the slice #1 may alternatively be re-mapped to the slice #2 or the slice #3. If the first handover message includes an indication indicating that the PDU session does not support network slice re-mapping, and the target RAN node does not support the slice #1, the target RAN node rejects handover of the PDU session on the source network slice. Alternatively, if the first handover message includes an indication indicating that the PDU session does not support network slice re-mapping, and the target RAN node supports the slice #1, the target RAN node may continue to perform the PDU session by using the slice #1.

For an identifier of a source network slice included in the first handover message, if the first handover message further includes an indication indicating whether one or more PDU sessions corresponding to the identifier of the source network slice support network slice fallback, the admission control is used to determine whether to fall back the one or more PDU sessions to the default network slice. Specifically, for any PDU session corresponding to the source network slice, if the first handover message includes an indication indicating that the PDU session supports network slice fallback, the target RAN node determines, based on the default network slice information obtained in step S101, to fall back the PDU session on the source network slice to the default network slice. If the first handover message includes an indication indicating that the PDU session does not support network slice fallback, the target RAN node rejects handover of the PDU session on the source network slice.

Similarly, when the first handover message includes an identifier of a source network slice, if the first handover message further includes an indication indicating whether one or more PDU sessions corresponding to the identifier of the source network slice support network slice re-mapping and whether the one or more PDU sessions corresponding to the identifier of the source network slice support network slice fallback, for any PDU session corresponding to the source network slice, the target RAN node may choose, according to a policy, to re-map the PDU session to a network slice included in the network slice re-mapping information in S101, or to choose to fall back the PDU session to the default network slice.

S104. The target RAN node sends a first response message to the source RAN node.

Correspondingly, the source RAN node receives the first response message.

Specifically, in the Xn interface-based handover procedure in this embodiment, the first response message is a handover request acknowledgement (handover request acknowledgement) message.

In a possible implementation, the first handover message includes an indication indicating that a PDU session of a source network slice supports network slice re-mapping, and the target RAN node determines, through admission control, to re-map the PDU session. In this case, the first response message includes an identifier of the source network slice, an identifier of the PDU session, and an identifier of a network slice to which the PDU session is re-mapped. To be specific, if the PDU session supports network slice re-mapping, the target RAN node determines, through the admission control, the identifier of the network slice to which the PDU session is re-mapped. The target RAN node notifies, by using the first response message, the source RAN node of the specific network slice to which the PDU session on the source network slice is re-mapped.

In another possible implementation, the first handover message includes an indication indicating whether a PDU session of a source network slice supports network slice re-mapping. If the PDU session of the source network slice supports network slice re-mapping, and the target RAN node determines, through admission control, to re-map the PDU session, information included in the first response message is the same as that in the foregoing implementation. If the PDU session of the source network slice does not support network slice re-mapping, the target RAN node rejects re-mapping of the PDU session, and the PDU session is interrupted. In this case, the first response message includes an identifier of the source network slice, an identifier of the PDU session, and indication information indicating that the target RAN node rejects re-mapping of the PDU session.

In still another possible implementation, the first handover message includes an indication indicating that a PDU session of a source network slice supports network slice fallback, and the target RAN node determines, through the admission control, to fall back the PDU session to the default network slice. In this case, the first response message includes an identifier of the source network slice, an identifier of the PDU session, and an indication indicating that the PDU session falls back to the default network slice, or the first response message includes an identifier of the source network slice, an identifier of the PDU session, and an identifier of the default network slice. The indication indicating that the PDU session falls back to the default network slice may be one-bit indication information. For example, when the bit value is "1", it indicates that the PDU session falls back to the default network slice. Because the source RAN node and the target RAN node obtain the default network slice information in advance, when receiving the indication indicating that the PDU session falls back to the default network slice, the source RAN node can know a specific network slice to which the PDU session falls back. When the bit value is "0", it indicates that the PDU session does not fall back and the PDU session ends. To be specific, if the PDU session supports network slice fallback, the target RAN node determines, through the admission control, to fall back the PDU session to the default network slice. If determining to fall back the PDU session to the default network slice, the target RAN node notifies, by using the first response message, the source RAN node that the PDU session on the source network slice falls back to the default network slice.

In still another possible implementation, the first handover message includes an indication indicating whether a PDU session of a source network slice supports network slice fallback. If the PDU session of the source network slice supports network slice fallback, and the target RAN node determines, through the admission control, to fall back the PDU session to the default network slice, information included in the first response message is the same as that in the foregoing implementation. If the PDU session of the source network slice does not support network slice fallback, the target RAN node rejects fallback of the PDU session, and the PDU session is interrupted. In this case, the first response message includes an identifier of the source network slice, an identifier of the PDU session, and indication information indicating that the target RAN node rejects fallback of the PDU session.

In still another possible implementation, if the first handover message includes an indication indicating that a PDU session of a source network slice supports network slice re-mapping and an indication indicating that the PDU session of the source network slice supports network slice fallback, the first response message includes an identifier of the source network slice, an identifier of the PDU session, and an identifier of a network slice to which the PDU session is re-mapped; the first response message includes an identifier of the source network slice, an identifier of the PDU session, and an indication indicating that the PDU session falls back to the default network slice; or the first response message includes an identifier of the source network slice, an identifier of the PDU session, and an identifier of the default network slice. If the PDU session supports network slice re-mapping and the PDU session supports network slice fallback, the target RAN node determines, through the admission control, whether to re-map the PDU session to a new network slice or fall back the PDU session to the default network slice. The target RAN node notifies, by using the first response message, the source RAN node of the identifier of the network slice to which the PDU session on the source network slice is re-mapped, or indicates to fall back the PDU session to the default network slice.

After receiving the identifier of the network slice to which the PDU session is re-mapped or the identifier of the default network slice, the source RAN node may learn, by comparing the identifier of the source network slice to which the PDU session belongs with the identifier that is of the network slice to which the PDU session is re-mapped and that is allocated by the target RAN node, that the PDU session needs to be re-mapped; or may learn, by comparing the identifier of the source network slice to which the PDU session belongs with the identifier that is of the default network slice and that is indicated by the target RAN node, that the PDU session needs to fall back. Alternatively, the source RAN node may receive an indication indicating whether the PDU session needs to fall back to the default network slice. According to the indication, the source RAN node may learn that the PDU session needs to fall back to the default network slice.

S105. The source RAN node sends a second message to the terminal device.

Correspondingly, the terminal device receives the second message. The second message may be an RRC message.

During specific implementation, in a possible implementation, the target RAN node may generate a container (container), and the container includes content included in the first response message. The target RAN node sends the container to the source RAN node. The source RAN node does not parse information in the container, but includes the container in the RRC message, and forwards the RRC message to the terminal device.

In another possible implementation, after parsing the first response message, the source RAN node includes a part or all of the information in the first response message in the RRC message generated by the source RAN node, and sends the RRC message to the terminal device.

If the terminal device receives the second message, and the second message may further include a configuration parameter of a network slice to which at least one PDU session is re-mapped or a configuration parameter of the default network slice, the terminal device randomly accesses the target RAN node, and communicates with the target RAN node based on the configuration parameter of the network slice to which the at least one PDU session is re-mapped, or communicates with the target RAN node based on the configuration parameter of the default network slice.

S106. The target RAN node sends a path handover request to the core network node.

The path handover request includes an identifier of a network slice to which each of one or more PDU sessions is re-mapped, or an indication indicating whether network slice fallback is performed on each of the one or more PDU sessions.

The target RAN node indicates PDU sessions that need to be re-mapped or fall back. The core network node modifies a corresponding PDU session based on the path handover request. Specifically, the PDU session is modified, so that the PDU session continues to be performed on the network slice to which the PDU session is re-mapped, or the PDU session is modified, so that the PDU session continues to be performed on the default network slice. It should be understood that different network slices have different data transmission paths. Therefore, when a network slice is re-mapped or falls back, paths of one or more PDU sessions on the network slice change. The core network node changes a path of a PDU session by modifying a context of the PDU session.

S107. The core network node sends a path handover response to the target RAN node. The path handover response includes one or more of the following information: PDU session identifiers of one or more PDU sessions whose path handover succeeds, PDU session identifiers of one or more PDU sessions whose path handover fails, and modified contexts of one or more PDU sessions.

The core network node sends path handover results of the one or more PDU sessions to the target RAN node. The path handover results of the one or more PDU sessions include one or more of the following information: PDU session identifiers of one or more PDU sessions whose path handover succeeds, PDU session identifiers of one or more PDU sessions whose path handover fails, and modified contexts of one or more PDU sessions. A modification result of the PDU session is carried in a path handover response.

Therefore, after the foregoing processing is performed, a network side procedure performed during handover of the terminal device is completed.

In addition, the source RAN node may support a CU-DU split architecture, and the target RAN node may also support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The CU of the target RAN node performs the foregoing step of obtaining the network slice re-mapping information and/or the default network slice information, the foregoing step of receiving the first handover message, the foregoing step of performing admission control based on the obtained network slice re-mapping information and/or default network slice information and a part or all of the information in the received first handover message, and the foregoing step of sending the first response message to the CU of the source RAN node.

The source RAN node may not support a CU-DU split architecture, but the target RAN node may support the CU-DU split architecture. In this case, the source RAN node performs the foregoing step of obtaining network slice re-mapping information and/or default network slice information, the foregoing step of sending a first handover message, the foregoing step of receiving a first response message, and the foregoing step of sending a second message. The CU of the target RAN node performs the foregoing step of obtaining the network slice re-mapping information and/or the default network slice information, the foregoing step of receiving the first handover message, and the foregoing step of performing admission control based on the obtained network slice re-mapping information and/or default network slice information and a part or all of the information in the received first handover message, and sending the first response message to the source RAN node.

The source RAN node may support a CU-DU split architecture, but the target RAN node may not support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The target RAN node performs the foregoing step of obtaining the network slice re-mapping information and/or the default network slice information, the foregoing step of receiving the first handover message, and the foregoing step of performing admission control based on the obtained network slice re-mapping information and/or default network slice information and the first handover message, and sending the first response message to the CU of the source RAN node.

According to the handover method provided in this embodiment of this application, during Xn interface-based handover, an indication indicating whether a PDU session supports network slice re-mapping and/or an indication indicating whether the PDU session supports network slice fallback are/is carried in a handover message, and entire network slice re-mapping information and/or default network slice information do/does not need to be carried. Therefore, this reduces signaling overheads caused during handover interaction.

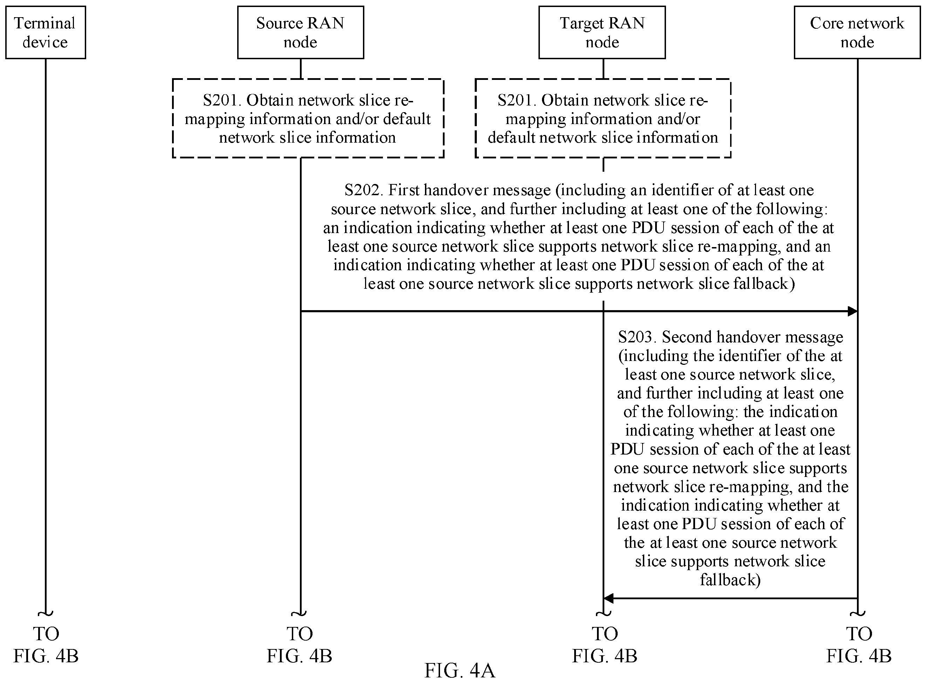

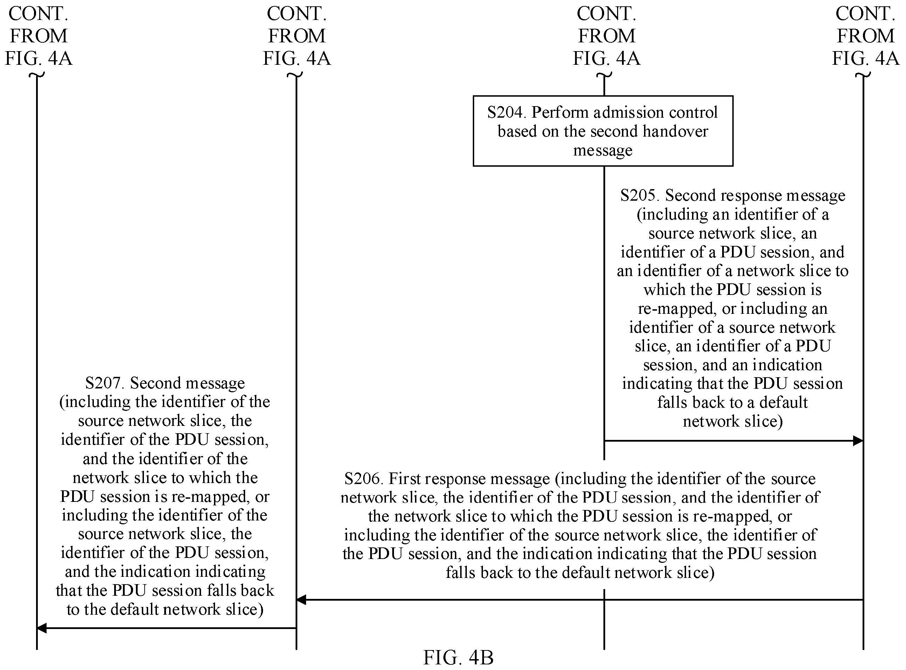

The foregoing handover method is an Xn interface-based handover method, and the handover method may alternatively be an NG interface-based handover method. FIG. 4A and FIG. 4B are a schematic flowchart of another handover method according to an embodiment of this application. This method mainly relates to network slice re-mapping or fallback performed at a PDU session granularity, where the network slice re-mapping or fallback is based on NG interface handover. For example, the method may include the following procedure.

S201. A source RAN node and a target RAN node obtain network slice re-mapping information and/or default network slice information.

For specific implementation of this step, refer to step S101 in the embodiment shown in FIG. 3A.

S202. The source RAN node sends a first handover message to a core network node, where the first handover message includes identifiers of one or more source network slices, an indication indicating whether one or more PDU sessions of each of the one or more source network slices support network slice re-mapping, and/or an indication indicating whether one or more PDU sessions of each of the one or more source network slices support network slice fallback.

Correspondingly, the core network node receives the first handover message.

Specifically, the first handover message may be a handover required (handover required) message. The handover required message indicates the source RAN node to be handed over. The handover required message includes identifiers of one or more source network slice, an indication indicating whether one or more PDU sessions of each of the one or more source network slices support network slice re-mapping, and/or an indication indicating whether one or more PDU sessions of each of the one or more source network slices support network slice fallback.

For specific implementation of this step, refer to the related descriptions in step S102 in the embodiment shown in FIG. 3A.

S203. The core network node sends a second handover message to the target RAN node.

For example, the source RAN node determines the target RAN node in one or more RAN nodes based on signal strength measurement reports of the one or more RAN nodes neighboring to the source RAN node, where the reports are reported by the UE. The first handover message may further include an identifier of the target RAN node. The core network node sends the second handover message to the target RAN node.

Content of the second handover message includes a part or all of content of the first handover message.

Correspondingly, the target RAN node receives the second handover message.

Specifically, the second handover message may be a handover request (handover request) message. The handover request message indicates that a PDU session of the source RAN node is requested to be handed over to the target RAN node.

For specific implementation of this step, refer to the related descriptions in step S102 in the embodiment shown in FIG. 3A.

S204. The target RAN node performs admission control based on the second handover message.

The admission control is used to determine whether to perform network slice re-mapping on one or more PDU sessions, and determine an identifier of a network slice to which the one or more PDU sessions are re-mapped; or the admission control is used to determine whether to fall back the one or more PDU sessions to a default network slice.

For specific implementation of this step, refer to step S103 in the embodiment shown in FIG. 3A.

S205. The target RAN node sends a second response message to the core network node.

Correspondingly, the core network node receives the second response message.

The second response message is a response message for the second handover message. Specifically, the second response message may be a handover request acknowledgement (handover request acknowledgement) message. The handover request acknowledgement message is a response to the handover request message.

For specific implementation of this step, refer to the related descriptions in step S104 in the embodiment shown in FIG. 3B.

S206. The core network node sends a first response message to the source RAN node.

Content of the first response message may include a part or all of content of the second response message.

Specifically, the second handover message may be a handover command (handover command). The handover command indicates the source RAN node to hand over the PDU session to the target RAN node. Specifically, the handover command indicates the source RAN node to hand over the PDU session to a network slice for re-mapping or to the default network slice.

For specific implementation of this step, refer to the related descriptions of step S104 in the embodiment shown in FIG. 3B.

S207. The source RAN node sends a second message to a terminal device.

Correspondingly, the terminal device receives the second message.

For specific implementation of this step, refer to step S105 in the embodiment shown in FIG. 3B.

According to the handover method provided in this embodiment of this application, during NG interface-based handover, an indication indicating whether a PDU session supports network slice re-mapping and/or an indication indicating whether the PDU session supports network slice fallback are/is carried in a handover message, and entire network slice re-mapping information and/or default network slice information do/does not need to be carried. Therefore, this reduces signaling overheads caused during handover interaction.

The foregoing embodiments describe network slice re-mapping or fallback performed at a PDU session granularity. The following describes network slice re-mapping or fallback performed at a QoS flow granularity. A QoS flow of a terminal device is also performed on a network slice. Therefore, when the terminal device is handed over between RAN nodes, network slice re-mapping or fallback performed at the QoS flow granularity may be further related.

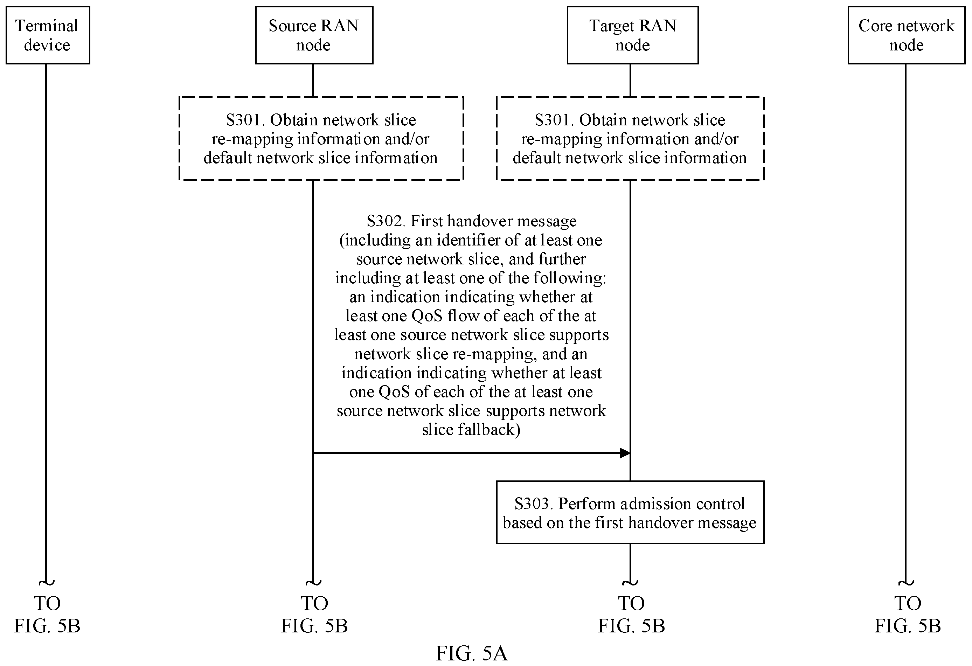

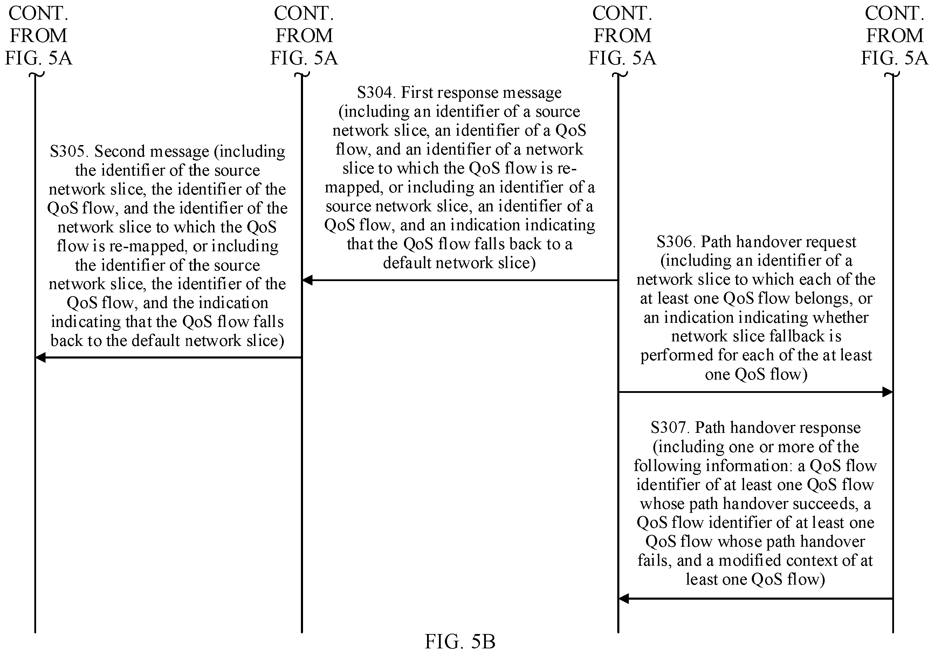

FIG. 5A and FIG. 5B are a schematic flowchart of a handover method according to an embodiment of this application. This procedure mainly relates network slice re-mapping or fallback performed at a QoS flow granularity, where the network slice re-mapping or fallback is based on Xn interface handover. For example, the method includes the following steps.

S301. A source RAN node and a target RAN node obtain network slice re-mapping information and/or default network slice information.

For specific implementation of this step, refer to the related descriptions in step S101 in the embodiment shown in FIG. 3A.

S302. The source RAN node sends a first handover message to the target RAN node, where the first handover message includes identifiers of one or more source network slices, an indication indicating whether one or more QoS flows of each of the one or more source network slices support network slice re-mapping, and/or an indication indicating whether one or more QoS flows of each of the one or more source network slices support network slice fallback.

Correspondingly, the target RAN node receives the first handover message.

Specifically, in the Xn interface-based handover procedure in this embodiment, the first handover message may be a handover request message.

Before sending the first handover message to the target RAN node, the source RAN node may further receive, from a core network node, an establishment request for the QoS flow. The establishment request for the QoS flow includes an indication indicating whether an established QoS flow supports network slice re-mapping, and/or an indication indicating whether the established QoS flow supports network slice fallback. Therefore, the source RAN node may perform a subsequent operation according to the foregoing indication.

During handover of the terminal device, QoS flows performed on one or more source network slices of the source RAN node need to be performed on the target RAN node side, to improve service continuity. However, a network slice supported by the target RAN node may be different from the source network slice. After the terminal device is handed over, the QoS flow may not be performed on the source network slice, and needs to be re-mapped to a new network slice supported by the target RAN node or fall back to the default network slice for performing. For a QoS flow performed on each source network slice, the source RAN node needs to indicate whether the QoS flow supports network slice re-mapping and/or network slice fallback.

When a source network slice is in a one-to-one correspondence with a QoS flow, in other words, when there is only one QoS flow currently on one source network slice and the QoS flow is to be handed over, in a possible implementation, the first handover message includes identifiers of one or more source network slices and an indication indicating whether a QoS flow of each of the one or more source network slices supports network slice re-mapping, that is, for an identifier of each source network slice, the first handover message indicates whether a QoS flow on the source network slice supports network slice re-mapping. Alternatively, the first handover message includes identifiers of one or more source network slices and an indication indicating whether a QoS flow of each of the one or more source network slices supports network slice fallback, that is, for an identifier of each source network slice, the first handover message indicates whether a QoS flow on the source network slice supports network slice fallback. Alternatively, the first handover message includes identifiers of one or more source network slices, an indication indicating whether a QoS flow of each of the one or more source network slices supports network slice re-mapping, and an indication indicating whether the QoS flow supports network slice fallback, that is, for an identifier of each source network slice, the first handover message indicates whether a QoS flow on the source network slice supports network slice re-mapping and fallback.

In another possible implementation, the first handover message includes identifiers of one or more source network slices and an indication indicating that a QoS flow of each of the one or more source network slices supports network slice re-mapping, that is, for an identifier of each source network slice, the first handover message indicates that a QoS flow on the source network slice supports network slice re-mapping. Alternatively, the first handover message includes identifiers of one or more source network slices and an indication indicating that a QoS flow of each of the one or more source network slices supports network slice fallback, that is, for an identifier of each source network slice, the first handover message indicates that a QoS flow on the source network slice supports network slice fallback. Alternatively, the first handover message includes identifiers of one or more source network slices, an indication indicating that a QoS flow of each of the one or more source network slices supports network slice re-mapping, and an indication indicating that the QoS flow supports network slice fallback, that is, for an identifier of each source network slice, the first handover message indicates that a QoS flow on the source network slice supports network slice re-mapping and fallback.

When a source network slice is in a one-to-many relationship with QoS flows, in other words, when there are a plurality of QoS flows on one source network slice and the QoS flows are to be handed over to the target RAN node, in a possible implementation, the first handover message includes identifiers of one or more source network slices, QoS flow identifiers of a plurality of QoS flows on each of the one or more source network slices, and an indication indicating whether QoS flows corresponding to a part or all of the QoS flow identifiers support network slice re-mapping, that is, for an identifier of each source network slice, the first handover message indicates whether a part or all QoS flows in a plurality of QoS flows on the source network slice support network slice re-mapping. Alternatively, the first handover message includes identifiers of one or more source network slices, QoS flow identifiers of a plurality of QoS flows on each of the one or more source network slices, and an indication indicating whether QoS flows corresponding to a part or all of the QoS flow identifiers support network slice fallback, that is, for an identifier of each source network slice, the first handover message indicates whether a part or all QoS flows in a plurality of QoS flows on the source network slice support network slice fallback. Alternatively, the first handover message includes identifiers of one or more source network slices, QoS flow identifiers of a plurality of QoS flows on each of the one or more source network slices, an indication indicating whether QoS flows corresponding to a part or all QoS flow identifiers support network slice re-mapping, and an indication indicating whether QoS flows corresponding to a part or all QoS flow identifiers support network slice fallback, that is, for an identifier of each source network slice, the first handover message indicates whether a part or all QoS flows in QoS flows on the source network slice support network slice re-mapping and fallback.

It should be noted that, an indication indicating whether a QoS flow supports network slice re-mapping and/or network slice fallback generally includes an identifier of the QoS flow and indication information indicating whether the QoS flow supports network slice re-mapping and/or network slice fallback. Similarly, an indication indicating that a QoS flow supports network slice re-mapping and/or network slice fallback generally includes an identifier of the QoS flow and indication information indicating that the QoS flow supports network slice re-mapping and/or network slice fallback. It should be understood that the indication information may be one-bit indication information. For example, when a value of the bit is 1, it indicates that network slice re-mapping and/or network slice fallback are/is supported. When a value of the bit is 0, it indicates that network slice re-mapping and/or network slice fallback are/is not supported.

S303. The target RAN node performs admission control based on the first handover message.

For an identifier of a source network slice included in the first handover message, if the first handover message further includes an indication indicating whether one or more QoS flows corresponding to the identifier of the source network slice support network slice re-mapping, the admission control is used to determine whether to perform network slice re-mapping on the one or more QoS flows, and determine an identifier of a network slice to which the one or more QoS flows are re-mapped. Specifically, for any QoS flow corresponding to the source network slice, if the first handover message includes an indication indicating that the QoS flow supports network slice re-mapping, the target RAN node determines, based on the network slice re-mapping information that corresponds to the identifier of the source network slice and that is obtained in step S301, to re-map the QoS flow on the source network slice to a new network slice. For example, a QoS flow on a source network slice (slice#1) is handed over to the target RAN node. However, the target RAN node does not support the slice #1, and network slice re-mapping information corresponding to the slice #1 includes a slice #2 and a slice #3. In this case, the target RAN node may re-map the QoS flow to the slice #2 or the slice #3 according to a policy (for example, based on respective load or performance indicators of the slice #2 and the slice #3 on the target RAN node, or priorities of the slices). For another example, if the target RAN node supports the slice #1, the target RAN node may continue to perform the QoS flow by using the slice #1. When load of the slice #1 of the target RAN node is excessively high, the slice #1 may alternatively be re-mapped to the slice #2 or the slice #3. If the first handover message includes an indication indicating that the QoS flow does not support network slice re-mapping, and the target RAN node does not support the slice #1, the target RAN node rejects handover of the QoS flow on the source network slice. Alternatively, if the first handover message includes an indication indicating that the QoS flow does not support network slice re-mapping, and the target RAN node supports the slice #1, the target RAN node may continue to perform the QoS flow by using the slice #1.

For an identifier of a source network slice included in the first handover message, if the first handover message further includes an indication indicating whether one or more QoS flows corresponding to the identifier of the source network slice support network slice fallback, the admission control is used to determine whether to fall back the one or more QoS flows to the default network slice. Specifically, for any QoS flow corresponding to the source network slice, if the first handover message includes an indication indicating that the QoS flow supports network slice fallback, the target RAN node determines, based on the default network slice information obtained in step S301, to fall back the QoS flow on the source network slice to the default network slice. If the first handover message includes an indication indicating that the QoS flow does not support network slice fallback, the target RAN node rejects handover of the QoS flow on the source network slice.

Similarly, when the first handover message includes an identifier of the source network slice, if the first handover message further includes an indication indicating whether one or more QoS flows corresponding to the identifier of the source network slice support network slice re-mapping and whether the one or more QoS flows corresponding to the identifier of the source network slice support network slice fallback, for any QoS flow corresponding to the source network slice, the target RAN node may choose, according to a policy, to re-map the QoS flow to a network slice included in the network slice re-mapping information in S301, or to choose to fall back the QoS flow to the default network slice.

S304. The target RAN node sends a first response message to the source RAN node.

Correspondingly, the source RAN node receives the first response message.

Specifically, in the Xn interface-based handover procedure in this embodiment, the first response message is a handover request acknowledgement message.

In a possible implementation, the first handover message includes an indication indicating that a QoS flow of a source network slice supports network slice re-mapping, and the target RAN node determines, through admission control, to re-map the QoS flow. In this case, the first response message includes an identifier of the source network slice, an identifier of the QoS flow, and an identifier of a network slice to which the QoS flow is re-mapped. To be specific, if the QoS flow supports network slice re-mapping, the target RAN node determines, through the admission control, an identifier of a network slice to which the QoS flow is re-mapped. The target RAN node notifies, by using the first response message, the source RAN node of the specific network slice to which the QoS flow on the source network slice is re-mapped.

In another possible implementation, the first handover message includes an indication indicating whether a QoS flow of a source network slice supports network slice re-mapping. If the QoS flow of the source network slice supports network slice re-mapping, and the target RAN node determines, through admission control, to re-map the QoS flow, information included in the first response message is the same as that in the foregoing implementation. If the QoS flow of the source network slice does not support network slice re-mapping, the target RAN node rejects re-mapping of the QoS flow, and the QoS flow is interrupted. In this case, the first response message includes an identifier of the source network slice, an identifier of the QoS flow, and indication information indicating that the target RAN node rejects re-mapping of the QoS flow.

In still another possible implementation, the first handover message includes an indication indicating that a QoS flow of a source network slice supports network slice fallback, and the target RAN node determines, through the admission control, to fall back the QoS flow to the default network slice. In this case, the first response message includes an identifier of the source network slice, an identifier of the QoS flow, and an indication indicating that the QoS flow falls back to the default network slice, or the first response message includes an identifier of the source network slice, an identifier of the QoS flow, and an identifier of the default network slice. The indication indicating that the QoS flow falls back to the default network slice may be one-bit indication information. For example, when the bit value is "1", it indicates that the QoS flow falls back to the default network slice. Because the source RAN node and the target RAN node obtain the default network slice information in advance, when receiving the indication indicating that the QoS flow falls back to the default network slice, the source RAN node can know a specific network slice to which the QoS flow falls back. When the bit value is "0", it indicates that the QoS flow does not fall back and the QoS flow ends. To be specific, if the QoS flow supports network slice fallback, the target RAN node determines, through the admission control, to fall back the QoS flow to the default network slice. If determining to fall back the QoS flow to the default network slice, the target RAN node notifies, by using the first response message, the source RAN node that the QoS flow on the source network slice falls back to the default network slice.

In still another possible implementation, the first handover message includes an indication indicating whether a QoS flow of a source network slice supports network slice fallback. If the QoS flow of the source network slice supports network slice fallback, and the target RAN node determines, through the admission control, to fall back the QoS flow to the default network slice, information included in the first response message is the same as that in the foregoing implementation. If the QoS flow of the source network slice does not support network slice fallback, the target RAN node rejects fallback of the QoS flow, and the QoS flow is interrupted. In this case, the first response message includes an identifier of the source network slice, an identifier of the QoS flow, and indication information indicating that the target RAN node rejects fallback of the QoS flow.

In still another possible implementation, if the first handover message includes an indication indicating that a QoS flow of a source network slice supports network slice re-mapping and an indication indicating that the QoS flow of the source network slice supports network slice fallback, the first response message includes an identifier of the source network slice, an identifier of the QoS flow, and an identifier of a network slice to which the QoS flow is re-mapped; the first response message includes an identifier of the source network slice, an identifier of the QoS flow, and an indication indicating that the QoS flow falls back to the default network slice; or the first response message includes an identifier of the source network slice, an identifier of the QoS flow, and an identifier of the default network slice. If the QoS flow supports network slice re-mapping and the QoS flow supports network slice fallback, the target RAN node determines, through the admission control, whether to re-map the QoS flow to a new network slice or fall back the QoS flow to the default network slice. The target RAN node notifies, by using the first response message, the source RAN node of the identifier of the network slice to which the QoS flow on the source network slice is re-mapped, or indicates to fall back the QoS flow to the default network slice.

After receiving the identifier of the network slice to which the QoS flow is re-mapped or the identifier of the default network slice, the source RAN node may learn, by comparing the identifier of the source network slice to which the QoS flow belongs with the identifier that is of the network slice to which the QoS flow is re-mapped and that is allocated by the target RAN node, that the QoS flow needs to be re-mapped; or may learn, by comparing the identifier of the source network slice to which the QoS flow belongs with the identifier that is of the default network slice and that is indicated by the target RAN node, that the QoS flow needs to fall back. Alternatively, the source RAN node may receive an indication indicating whether the QoS flow needs to fall back to the default network slice. According to the indication, the source RAN node may learn that the QoS flow needs to fall back to the default network slice.

S305. The source RAN node sends a second message to the terminal device.

Correspondingly, the terminal device receives the second message. The second message may be an RRC message.

During specific implementation, in a possible implementation, the target RAN node may generate a container, and the container includes content included in the first response message. The target RAN node sends the container to the source RAN node. The source RAN node does not parse information in the container, but includes the container in the RRC message, and forwards the RRC message to the terminal device.

In another possible implementation, after parsing the first response message, the source RAN node includes a part or all of the information in the first response message in the RRC message generated by the source RAN node, and sends the RRC message to the terminal device.

If the terminal device receives the second message, and the second message may further include a configuration parameter of a network slice to which at least one PDU session is re-mapped or a configuration parameter of the default network slice, the terminal device randomly accesses the target RAN node, and communicates with the target RAN node based on the configuration parameter of the network slice to which the at least one PDU session is re-mapped, or communicates with the target RAN node based on the configuration parameter of the default network slice.

S306. The target RAN node sends a path handover request to the core network node.

The path handover request includes an identifier of a network slice to which each of one or more QoS flows is re-mapped, or an indication indicating whether network slice fallback is performed on each of the one or more QoS flows.

The target RAN node indicates QoS flows that need to be re-mapped or fall back. The core network node modifies a corresponding QoS flow based on the path handover request. Specifically, the QoS flow is modified, so that the QoS flow continues to be performed on the network slice to which the QoS flow is re-mapped, or the QoS flow is modified, so that the QoS flow continues to be performed on the default network slice. It should be understood that different network slices have different data transmission paths. Therefore, when a network slice is re-mapped or falls back, paths of one or more QoS flows on the network slice change. The core network node changes a path of a QoS flow by modifying a context of the QoS flow.

S307. The core network node sends a path handover response to the target RAN node. The path handover response includes one or more of the following information: QoS flow identifiers of one or more QoS flows whose path handover succeeds, QoS flow identifiers of one or more QoS flows whose path handover fails, and modified contexts of one or more QoS flows.

The core network node sends path handover results of the one or more QoS flows to the target RAN node. The path handover results of the one or more QoS flows include one or more of the following information: QoS flow identifiers of one or more QoS flows whose path handover succeeds, QoS flow identifiers of one or more QoS flows whose path handover fails, and modified contexts of one or more QoS flows. A modification result of the QoS flow is carried in a path handover response.

Therefore, after the foregoing processing is performed, a network side procedure performed during handover of the terminal device is completed.

In addition, the source RAN node may support a CU-DU split architecture, and the target RAN node may also support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The CU of the target RAN node performs the foregoing step of obtaining the network slice re-mapping information and/or the default network slice information, the foregoing step of receiving the first handover message, the foregoing step of performing admission control based on the obtained network slice re-mapping information and/or default network slice information and a part or all of the information in the received first handover message, and the foregoing step of sending the first response message to the CU of the source RAN node.

The source RAN node may not support a CU-DU split architecture, but the target RAN node may support the CU-DU split architecture. In this case, the source RAN node performs the foregoing step of obtaining network slice re-mapping information and/or default network slice information, the foregoing step of sending a first handover message, the foregoing step of receiving a first response message, and the foregoing step of sending a second message. The CU of the target RAN node performs the foregoing step of obtaining the network slice re-mapping information and/or the default network slice information, the foregoing step of receiving the first handover message, and the foregoing step of performing admission control based on the obtained network slice re-mapping information and/or default network slice information and a part or all of the information in the received first handover message, and sending the first response message to the source RAN node.

The source RAN node may support a CU-DU split architecture, but the target RAN node may not support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The target RAN node performs the foregoing step of obtaining the network slice re-mapping information and/or the default network slice information, the foregoing step of receiving the first handover message, and the foregoing step of performing admission control based on the obtained network slice re-mapping information and/or default network slice information and the first handover message, and sending the first response message to the CU of the source RAN node.

According to the handover method provided in this embodiment of this application, during Xn interface-based handover, an indication indicating whether a QoS flow supports network slice re-mapping and/or an indication indicating whether the QoS flow supports network slice fallback are/is carried in a handover message, and entire network slice re-mapping information and/or default network slice information do/does not need to be carried. Therefore, this reduces signaling overheads caused during handover interaction.

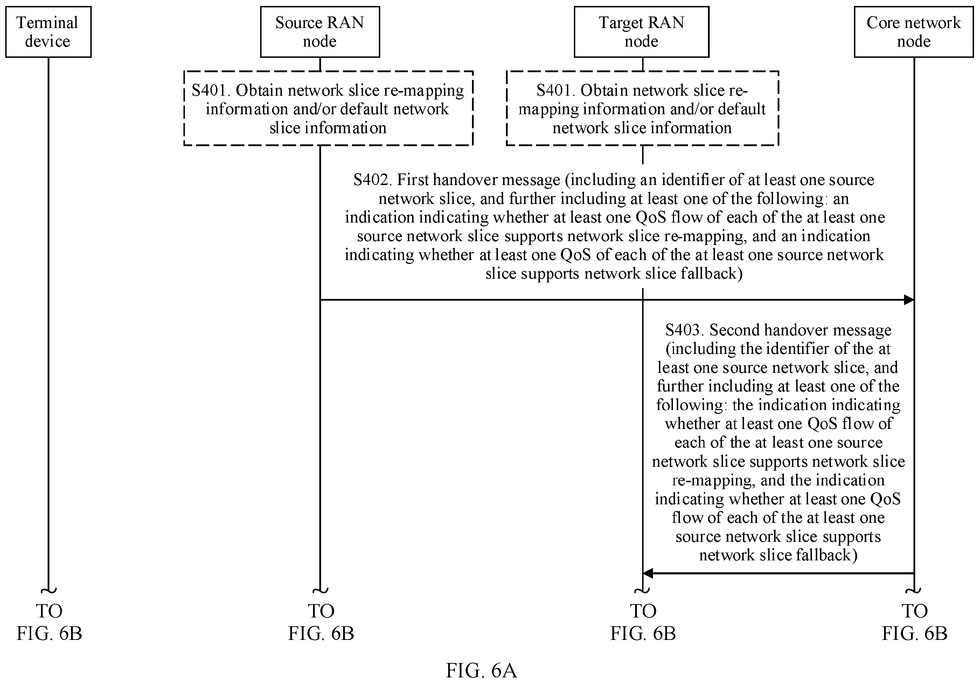

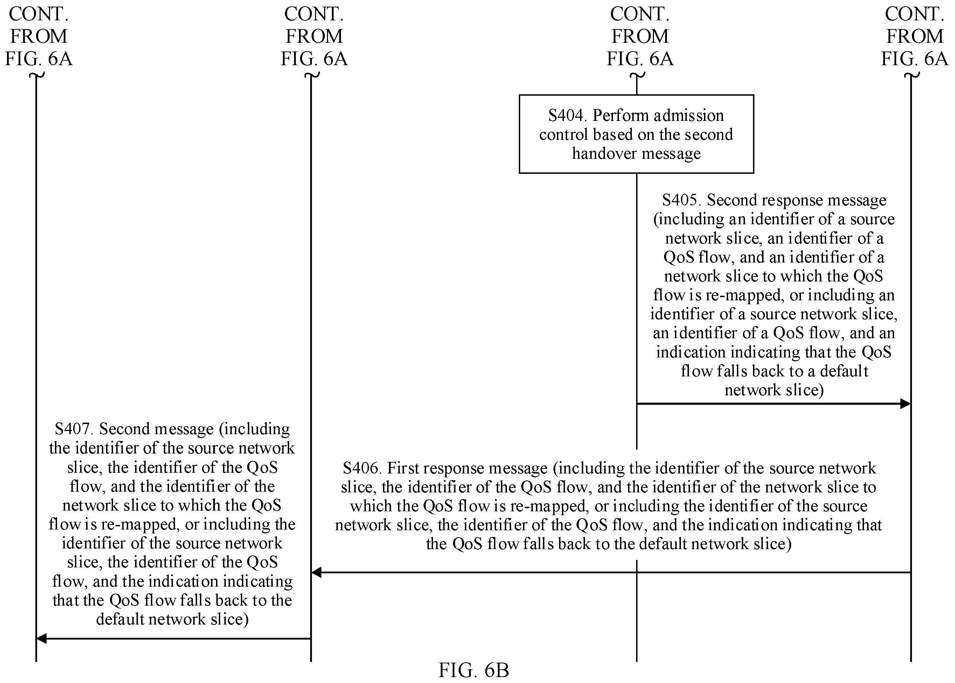

The foregoing handover method is an Xn interface-based handover method, and the handover method may alternatively be an NG interface-based handover method. FIG. 6A and FIG. 6B are a schematic flowchart of another handover method according to an embodiment of this application. This method mainly relates to network slice re-mapping or fallback performed at a QoS flow granularity, where the network slice re-mapping or fallback is based on NG interface handover. For example, the method may include the following procedure:
S401. A source RAN node and a target RAN node obtain network slice re-mapping information and/or default network slice information.

For specific implementation of this step, refer to the related descriptions in step S101 in the embodiment shown in FIG. 3A.

S402. The source RAN node sends a first handover message to a core network node, where the first handover message includes identifiers of one or more source network slices, an indication indicating whether one or more QoS flows of each of the one or more source network slices support network slice re-mapping, and/or an indication QoS flow indicating whether one or more QoS flows of each of the one or more source network slices support network slice fallback.

Correspondingly, the core network node receives the first handover message.

Specifically, the first handover message may be a handover required message. The handover required message indicates the source RAN node to be handed over. The handover required message includes identifiers of one or more source network slice, an indication indicating whether one or more QoS flows in each of the one or more source network slices support network slice re-mapping, and/or an indication QoS flow indicating whether one or more QoS flows in each of the one or more source network slices support network slice fallback.

For specific implementation of this step, refer to the related descriptions in step S302 in the embodiment shown in FIG. 5A.

S403. The core network node sends a second handover message to the target RAN node.

For example, the source RAN node determines the target RAN node in one or more RAN nodes based on signal strength measurement reports of the one or more RAN nodes neighboring to the source RAN node, where the reports are reported by the UE. The first handover message may further include an identifier of the target RAN node. The core network node sends the second handover message to the target RAN node.

Content of the second handover message includes a part or all of content of the first handover message.

Correspondingly, the target RAN node receives the second handover message.

Specifically, the second handover message may be a handover request message. The handover request message indicates that a QoS flow of the source RAN node is requested to be handed over to the target RAN node.

For specific implementation of this step, refer to the related descriptions in step S302 in the embodiment shown in FIG. 5A.

S404. The target RAN node performs admission control based on the second handover message.

The admission control is used by a QoS flow to determine whether to perform network slice re-mapping on one or more QoS flows, and determine an identifier of a network slice to which the one or more QoS flows are re-mapped; or the admission control is used by a QoS flow to determine whether to fall back the one or more QoS flows to a default network slice.

For specific implementation of this step, refer to the related descriptions in step S303 in the embodiment shown in FIG. 5A.

S405. The target RAN node sends a second response message to the core network node.

Correspondingly, the core network node receives the second response message.

The second response message is a response message for the second handover message. Specifically, the second response message may be a handover request acknowledgement message. The handover request acknowledgement message is a response to the handover request message.

For specific implementation of this step, refer to the related descriptions in step S304 in the embodiment shown in FIG. 5B.

S406. The core network node sends a first response message to the source RAN node.

Content of the first response message may include a part or all of content of the second response message.

Specifically, the second handover message may be a handover command. The handover command indicates the source RAN node to hand over the QoS flow to the target RAN node. Specifically, the handover command indicates the source RAN node to hand over the QoS flow to a network slice for re-mapping or to the default network slice.

For specific implementation of this step, refer to the related descriptions in step S304 in the embodiment shown in FIG. 5B.

S407. The source RAN node sends a second message to a terminal device.

Correspondingly, the terminal device receives the second message.

For specific implementation of this step, refer to step S305 in the embodiment shown in FIG. 5B.

According to the handover method provided in this embodiment of this application, during NG interface-based handover, an indication indicating whether a QoS flow supports network slice re-mapping and/or an indication indicating whether the QoS flow supports network slice fallback are/is carried in a handover message, and entire network slice re-mapping information and/or default network slice information do/does not need to be carried. Therefore, this reduces signaling overheads caused during handover interaction.

The foregoing embodiments describe network slice re-mapping or fallback performed at a QoS flow granularity. The following describes network slice re-mapping or fallback performed at a DRB granularity. When communicating with a RAN node, the terminal device uses different DRBs on an air interface to carry data with different QoS characteristics. One DRB uses a specific air interface resource, and an air interface resource corresponding to one DRB of the terminal device also belongs to one network slice. Therefore, when the terminal device is handed over between RAN nodes, network slice re-mapping or fallback performed at the DRB granularity may be further related. In other words, after handover is performed, an air interface resource corresponding to the DRB belongs to a network slice for re-mapping or a default network slice. One or more QoS flows are mapped to one DRB, that is, one DRB carries the one or more QoS flows. During handover, a mapping relationship between a DRB and a QoS flow remains unchanged.

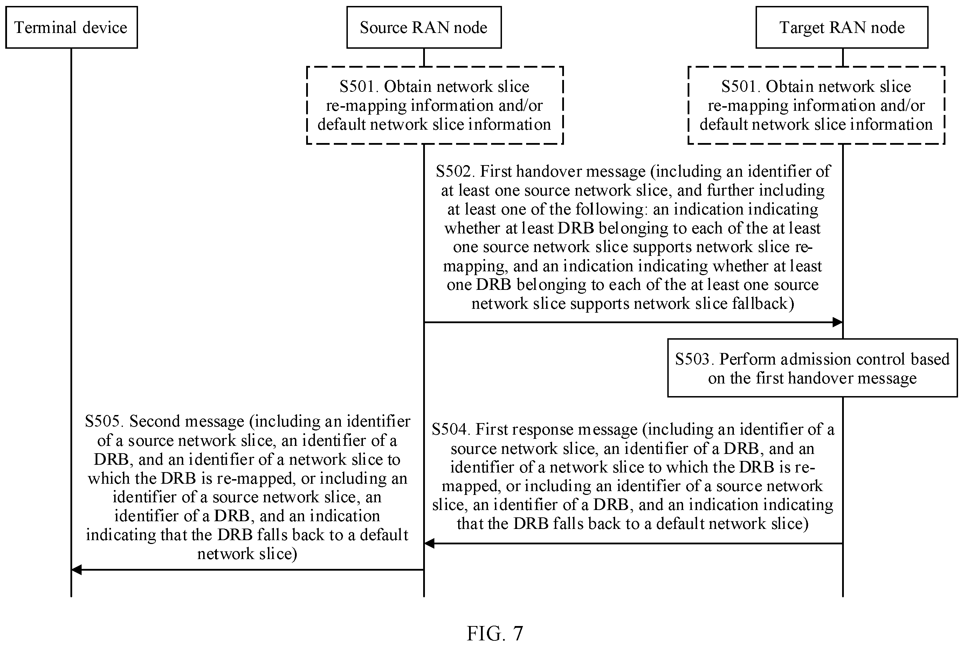

FIG. 7 is a schematic flowchart of a handover method according to an embodiment of this application. This procedure mainly relates to network slice re-mapping or fallback performed at a DRB granularity, where the network slice re-mapping or fallback is based on Xn interface handover. For example, the method includes the following steps.

S501. A source RAN node and a target RAN node obtain network slice re-mapping information and/or default network slice information.

For specific implementation of this step, refer to the related descriptions of step S101 in the embodiment shown in FIG. 3A or step S301 in the embodiment shown in FIG. 5A.

S502. The source RAN node sends a first handover message to the target RAN node, where the first handover message includes identifiers of one or more source network slices, an indication indicating whether one or more DRBs of each of the one or more source network slices support network slice re-mapping, and/or an indication indicating whether one or more DRBs of each of the one or more source network slices support network slice fallback.

Correspondingly, the target RAN node receives the first handover message.

Specifically, in the Xn interface-based handover procedure in this embodiment, the first handover message may be a handover request message.

During handover of the terminal device, DRBs belonging to one or more source network slices of the source RAN node need to be handed over to the target RAN node side, to improve service continuity. However, a network slice supported by the target RAN node may be different from the source network slice. After the terminal device is handed over, an air interface resource corresponding to a DRB may no longer belong to the source network slice, but belongs to a new network slice that is used for re-mapping and that is supported by the target RAN node or belongs to a default network slice. For each DRB belonging to the source network slice, the source RAN node needs to indicate whether the DRB supports network slice re-mapping and/or network slice fallback. It should be noted that, in this embodiment of this application, an air interface resource corresponding to a DRB belongs to a network slice, or in other words, the DRB belongs to the network slice.

When a source network slice is in a one-to-one correspondence with a DRB, in other words, when there is only one DRB currently on one source network slice and the DRB is to be handed over, in a possible implementation, the first handover message includes identifiers of one or more source network slices and an indication indicating whether a DRB belonging to each of the one or more source network slices supports network slice re-mapping, that is, for an identifier of each source network slice, the first handover message indicates whether a DRB belonging to the source network slice supports network slice re-mapping. Alternatively, the first handover message includes identifiers of one or more source network slices and an indication indicating whether a DRB belonging to each of the one or more source network slices supports network slice fallback, that is, for an identifier of each source network slice, the first handover message indicates whether a DRB belonging to the source network slice supports network slice fallback. Alternatively, the first handover message includes identifiers of one or more source network slices, an indication indicating whether a DRB belonging to each of the one or more source network slices supports network slice re-mapping, and an indication indicating whether the DRB supports network slice fallback, that is, for an identifier of each source network slice, the first handover message indicates whether a DRB on the source network slice supports network slice re-mapping and fallback.

In another possible implementation, the first handover message includes identifiers of one or more source network slices and an indication indicating that a DRB belonging to each of the one or more source network slices supports network slice re-mapping, that is, for an identifier of each source network slice, the first handover message indicates that a DRB belonging to the source network slice supports network slice re-mapping. Alternatively, the first handover message includes identifiers of one or more source network slices and an indication indicating that a DRB belonging to each of the one or more source network slices supports network slice fallback, that is, for an identifier of each source network slice, the first handover message indicates that a DRB belonging to the source network slice supports network slice fallback. Alternatively, the first handover message includes identifiers of one or more source network slices, an indication indicating that a DRB belonging to each of the one or more source network slices supports network slice re-mapping, and an indication indicating that the DRB supports network slice fallback, that is, for an identifier of each source network slice, the first handover message indicates that a DRB on the source network slice supports network slice re-mapping and fallback.

When a source network slice is in a one-to-many relationship with DRBs, in other words, when there are a plurality of DRBs on one source network slice and the DRBs are to be handed over to the target RAN node, in a possible implementation, the first handover message includes identifiers of one or more source network slices, DRB identifiers of a plurality of DRBs belonging to each of the one or more source network slices, and an indication indicating whether DRBs corresponding to a part or all of the DRB identifiers support network slice re-mapping, that is, for an identifier of each source network slice, the first handover message indicates whether a part or all DRBs in a plurality of DRBs on the source network slice support network slice re-mapping. Alternatively, the first handover message includes identifiers of one or more source network slices, DRB identifiers of a plurality of DRBs on each of the one or more source network slices, and an indication indicating whether DRBs corresponding to a part or all of the DRB identifiers support network slice fallback, that is, for an identifier of each source network slice, the first handover message indicates whether a part or all DRBs in a plurality of DRBs belonging to the source network slice support network slice fallback. Alternatively, the first handover message includes identifiers of one or more source network slices, DRB identifiers of a plurality of DRBs belonging to each of the one or more source network slices, an indication indicating whether DRBs corresponding to a part or all DRB identifiers support network slice re-mapping, and an indication indicating whether DRBs corresponding to a part or all DRB identifiers support network slice fallback, that is, for an identifier of each source network slice, the first handover message indicates whether a part or all DRBs in DRBs on the source network slice support network slice re-mapping and fallback.

It should be noted that, an indication indicating whether a DRB supports network slice re-mapping and/or network slice fallback generally includes an identifier of the DRB and indication information indicating whether the DRB supports network slice re-mapping and/or network slice fallback. Similarly, an indication indicating that a DRB supports network slice re-mapping and/or network slice fallback generally includes an identifier of the DRB and indication information indicating that the DRB supports network slice re-mapping and/or network slice fallback. It should be understood that the indication information may be one-bit indication information. For example, when a value of the bit is 1, it indicates that network slice re-mapping and/or network slice fallback are/is supported. When a value of the bit is 0, it indicates that network slice re-mapping and/or network slice fallback are/is not supported.

S503. The target RAN node performs admission control based on the first handover message.

For an identifier of a source network slice included in the first handover message, if the first handover message further includes an indication indicating whether one or more DRBs corresponding to the identifier of the source network slice support network slice re-mapping, the admission control is used to determine whether to perform network slice re-mapping on the one or more DRBs, and determine an identifier of a network slice to which the one or more DRBs are re-mapped. Specifically, for any DRB belonging to the source network slice, if the first handover message includes an indication indicating that the DRB supports network slice re-mapping, the target RAN node determines, based on the network slice re-mapping information that corresponds to the source network slice identifier and that is obtained in step S501, to re-map the DRB belonging to the source network slice to a new network slice. For example, a DRB belonging to a source network slice (slice#1) is handed over to the target RAN node. However, the target RAN node does not support the slice #1, and network slice re-mapping information corresponding to the slice #1 includes a slice #2 and a slice #3. In this case, the target RAN node may re-map the DRB to the slice #2 or the slice #3 according to a policy (for example, based on respective load or performance indicators of the slice #2 and the slice #3 on the target RAN node, or priorities of the slices). For another example, if the target RAN node supports the slice #1, the DRB may belong to the slice #1 of the target RAN node. When load of the slice #1 of the target RAN node is excessively high, the slice #1 may alternatively be re-mapped to the slice #2 or the slice #3. If the first handover message includes an indication indicating that the DRB does not support network slice re-mapping, and the target RAN node does not support the slice #1, the target RAN node rejects handover of the DRB belonging to the source network slice. Alternatively, if the first handover message includes an indication indicating that the DRB does not support network slice re-mapping, but the target RAN node supports the slice #1, the DRB may belong to the slice #1 of the target RAN node.

For an identifier of a source network slice included in the first handover message, if the first handover message further includes an indication indicating whether one or more DRBs corresponding to the identifier of the source network slice support network slice fallback, the admission control is used to determine whether to fall back the one or more DRBs to the default network slice. Specifically, for any DRB belonging to the source network slice, if the first handover message includes an indication indicating that the DRB supports network slice fallback, the target RAN node determines, based on the default network slice information obtained in step S501, to fall back the DRB belonging to the source network slice to the default network slice. If the first handover message includes an indication indicating that the DRB does not support network slice fallback, the target RAN node rejects handover of the DRB belonging to the source network slice.

Similarly, when the first handover message includes an identifier of a source network slice, if the first handover message further includes an indication indicating whether one or more DRBs corresponding to the identifier of the source network slice support network slice re-mapping and whether the one or more DRBs corresponding to the identifier of the source network slice support network slice fallback, for any DRB belonging to the source network slice, the target RAN node may choose, according to a policy, to re-map the DRB to a network slice included in the network slice re-mapping information in S501, or to choose to fall back the DRB to the default network slice.

During the foregoing admission control, whether the target RAN node accepts a lossless data forwarding requirement of the DRB further needs to be considered, that is, a mapping relationship between a DRB and a QoS flow cannot be changed.

S504. The target RAN node sends a first response message to the source RAN node.

Correspondingly, the source RAN node receives the first response message.

Specifically, in the Xn interface-based handover procedure in this embodiment, the first response message is a handover request acknowledgement message.

In a possible implementation, the first handover message includes an indication indicating that a DRB belonging to a source network slice supports network slice re-mapping, and the target RAN node determines, through admission control, to re-map the DRB. In this case, the first response message includes an identifier of the source network slice, an identifier of the DRB, and an identifier of a network slice to which the DRB is re-mapped. To be specific, if the DRB supports network slice re-mapping, the target RAN node determines, through the admission control, an identifier of a network slice to which the DRB is re-mapped. The target RAN node notifies, by using the first response message, the source RAN node of the specific network slice to which the DRB on the source network slice is re-mapped.

In another possible implementation, the first handover message includes an indication indicating whether a DRB belonging to a source network slice supports network slice re-mapping. If the DRB belonging to the source network slice supports network slice re-mapping, and the target RAN node determines, through admission control, to re-map the DRB, information included in the first response message is the same as that in the foregoing implementation. If the DRB belonging to the source network slice does not support network slice re-mapping, the target RAN node rejects re-mapping of the DRB, and the DRB ends. In this case, the first response message includes an identifier of the source network slice, an identifier of the DRB, and indication information indicating that the target RAN node rejects re-mapping of the DRB.

In still another possible implementation, the first handover message includes an indication indicating that a DRB belonging to a source network slice supports network slice fallback, and the target RAN node determines, through the admission control, to fall back the DRB to the default network slice. In this case, the first response message includes an identifier of the source network slice, an identifier of the DRB, and an indication indicating that the DRB falls back to the default network slice, or the first response message includes an identifier of the source network slice, an identifier of the DRB, and an identifier of the default network slice. The indication indicating that the DRB falls back to the default network slice may be one-bit indication information. For example, when the bit value is "1", it indicates that the DRB falls back to the default network slice. Because the source RAN node and the target RAN node obtain the default network slice information in advance, when receiving the indication indicating that the DRB falls back to the default network slice, the source RAN node can know a specific network slice to which the DRB falls back. When the bit value is "0", it indicates that the DRB does not fall back and the DRB ends. To be specific, if the DRB supports network slice fallback, the target RAN node determines, through the admission control, to fall back the DRB to the default network slice. If determining to fall back the DRB to the default network slice, the target RAN node notifies, by using the first response message, the source RAN node that the DRB on the source network slice falls back to the default network slice.

In still another possible implementation, the first handover message includes an indication indicating whether a DRB belonging to a source network slice supports network slice fallback. If the DRB belonging to the source network slice supports network slice fallback, and the target RAN node determines, through admission control, to fall back the DRB to the default network slice, information included in the first response message is the same as that in the foregoing implementation. If the DRB of the source network slice does not support network slice fallback, the target RAN node rejects fallback of the DRB, and the DRB is interrupted. In this case, the first response message includes an identifier of the source network slice, an identifier of the DRB, and indication information indicating that the target RAN node rejects fallback of the DRB.

In still another possible implementation, if the first handover message includes an indication indicating that a DRB belonging to a source network slice supports network slice re-mapping and an indication indicating that the DRB of the source network slice supports network slice fallback, the first response message includes an identifier of the source network slice, an identifier of the DRB, and an identifier of a network slice to which the DRB is re-mapped; the first response message includes an identifier of the source network slice, an identifier of the DRB, and an indication indicating that the DRB falls back to the default network slice; or the first response message includes an identifier of the source network slice, an identifier of the DRB, and an identifier of the default network slice. If the DRB supports network slice re-mapping and the DRB supports network slice fallback, the target RAN node determines, through the admission control, whether to re-map the DRB to a new network slice or fall back the DRB to the default network slice. The target RAN node notifies, by using the first response message, the source RAN node of the identifier of the network slice to which the DRB on the source network slice is re-mapped, or indicates to fall back the DRB to the default network slice.

After receiving the identifier of the network slice to which the DRB is re-mapped or the identifier of the default network slice, the source RAN node may learn, by comparing the identifier of the source network slice to which the DRB belongs with the identifier that is of the network slice to which the DRB is re-mapped and that is allocated by the target RAN node, that the DRB needs to be re-mapped; or may learn, by comparing the identifier of the source network slice to which the DRB belongs with the identifier that is of the default network slice and that is indicated by the target RAN node, that the DRB needs to fall back. Alternatively, the source RAN node may receive an indication indicating whether the DRB needs to fall back to the default network slice. According to the indication, the source RAN node may learn that the DRB needs to fall back to the default network slice.

S505. The source RAN node sends a second message to the terminal device.

Correspondingly, the terminal device receives the second message. The second message may be an RRC message.

During specific implementation, in a possible implementation, the target RAN node may generate a container, and the container includes content included in the first response message. The target RAN node sends the container to the source RAN node. The source RAN node does not parse information in the container, but includes the container in the RRC message, and forwards the RRC message to the terminal device.

In another possible implementation, after parsing the first response message, the source RAN node includes a part or all of the information in the first response message in the RRC message generated by the source RAN node, and sends the RRC message to the terminal device.

If the terminal device receives the second message, and the second message may further include a configuration parameter of a network slice to which at least one PDU session is re-mapped or a configuration parameter of a default network slice, the terminal device randomly accesses the target RAN node, and communicates with the target RAN node based on the configuration parameter of the network slice to which the at least one PDU session is re-mapped, or communicates with the target RAN node based on the configuration parameter of the default network slice.

Therefore, after the foregoing processing is performed, a network side procedure performed during handover of the terminal device is completed.

In addition, the source RAN node may support a CU-DU split architecture, and the target RAN node may also support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The CU of the target RAN node performs the foregoing step of obtaining the network slice re-mapping information and/or the default network slice information, the foregoing step of receiving the first handover message, the foregoing step of performing admission control based on the obtained network slice re-mapping information and/or default network slice information and a part or all of the information in the received first handover message, and the foregoing step of sending the first response message to the CU of the source RAN node.

The source RAN node may not support a CU-DU split architecture, but the target RAN node may support the CU-DU split architecture. In this case, the source RAN node performs the foregoing step of obtaining network slice re-mapping information and/or default network slice information, the foregoing step of sending a first handover message, the foregoing step of receiving a first response message, and the foregoing step of sending a second message. The CU of the target RAN node performs the foregoing step of obtaining the network slice re-mapping information and/or the default network slice information, and the foregoing step of receiving the first handover message, and the DU performs the foregoing step of performing admission control based on the obtained network slice re-mapping information and/or default network slice information and a part or all of the information in the received first handover message, and sending the first response message to the source RAN node.

The source RAN node may support a CU-DU split architecture, but the target RAN node may not support the CU-DU split architecture. In this case, the CU of the source RAN node performs the foregoing step of obtaining network slice re-mapping information and/or default network slice information, the foregoing step of sending a first handover message, the foregoing step of receiving a first response message, and the foregoing step of sending a second message by using the DU. After receiving the first response message, the CU forwards a part or all of the information in the first response message to the DU of the source RAN node. The target RAN node performs the foregoing step of obtaining the network slice re-mapping information and/or the default network slice information, the foregoing step of receiving the first handover message, and the foregoing step of performing admission control based on the obtained network slice re-mapping information and/or default network slice information and the first handover message, and sending the first response message to the CU of the source RAN node.

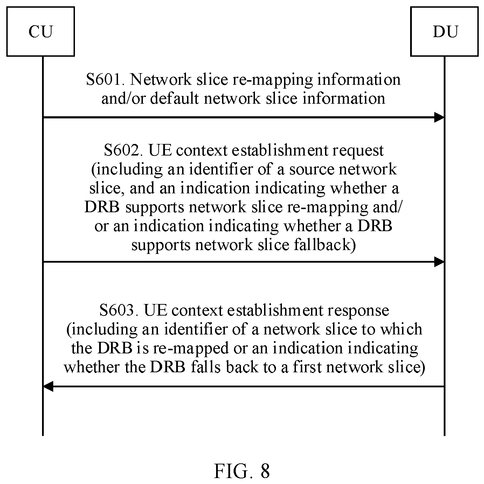

As shown in FIG. 8, network slice re-mapping/fallback performed at a DRB granularity is used as an example to describe a procedure in which a CU and a DU in a target RAN node implement the foregoing handover method. In step S601, after obtaining the network slice re-mapping information and/or the default network slice information that are/is sent by a core network node or another RAN node, the CU sends the obtained network slice re-mapping information and/or default network slice information to the DU by using an F1AP message. Then, in step S602, after receiving a first handover message sent by a source RAN node, the CU sends a UE context establishment request to the DU. The context establishment request includes an identifier of a source network slice, an indication indicating whether a DRB supports network slice re-mapping, and/or an indication indicating whether the DRB supports network slice fallback. The DU performs admission control based on the indication and the network slice re-mapping information and/or the default network slice information. In step S603, the DU sends a UE context establishment response to the CU, where the UE context establishment response includes an identifier of a network slice to which the DRB is re-mapped, or an indication indicating whether the DRB falls back to the default network slice.

According to the handover method provided in this embodiment of this application, during Xn interface-based handover, an indication indicating whether a DRB supports network slice re-mapping and/or an indication indicating whether the DRB supports network slice fallback are/is carried in a handover message, and entire network slice re-mapping information and/or default network slice information do/does not need to be carried. Therefore, this reduces signaling overheads caused during handover interaction.

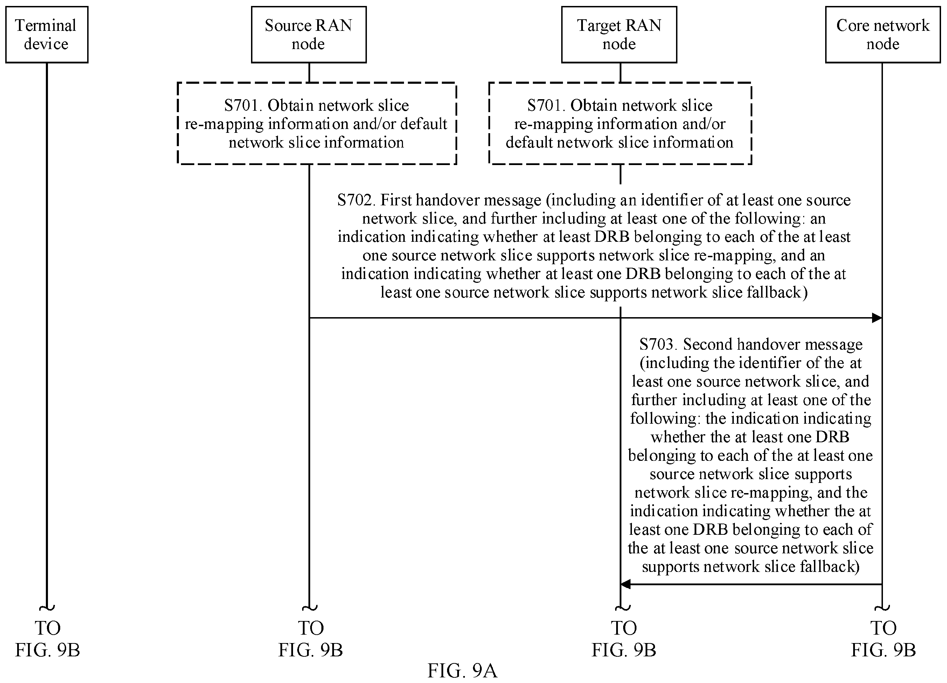

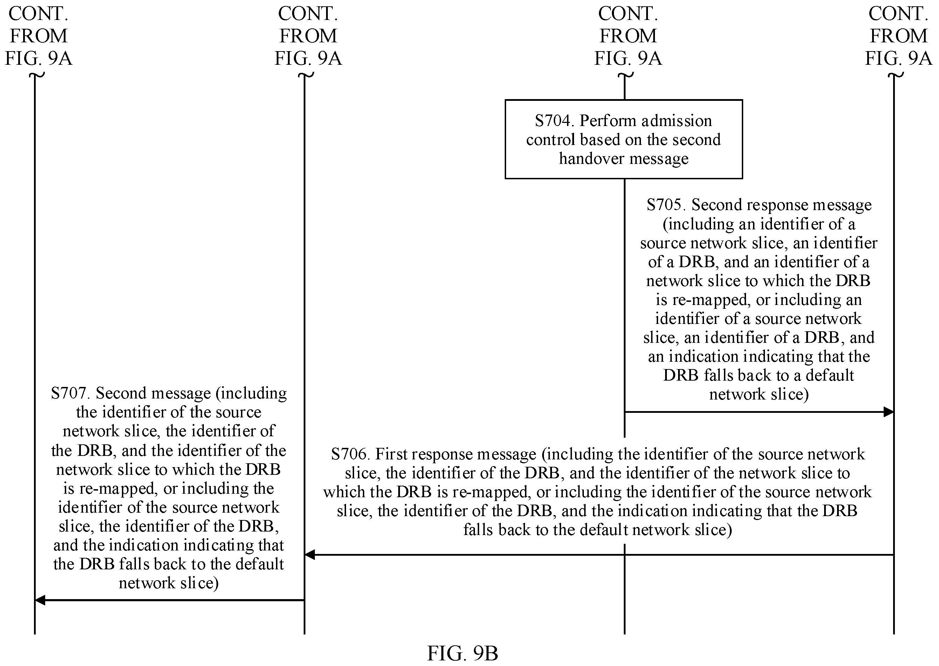

The foregoing handover method is an Xn interface-based handover method, and the handover method may alternatively be an NG interface-based handover method. FIG. 9A and FIG. 9B are a schematic flowchart of another handover method according to an embodiment of this application. This method mainly relates network slice re-mapping or fallback performed at a DRB granularity, where the network slice re-mapping or fallback is based on NG interface handover. For example, the method may include the following procedure.

S701. A source RAN node and a target RAN node obtain network slice re-mapping information and/or default network slice information.

For specific implementation of this step, refer to the related descriptions in step S501 in the embodiment shown in FIG. 7.

S702. The source RAN node sends a first handover message to a core network node, where the first handover message includes identifiers of one or more source network slices, an indication indicating whether one or more DRBs in each of the one or more source network slices support network slice re-mapping, and/or an indication DRB indicating whether one or more DRBs in each of the one or more source network slices support network slice fallback.

Correspondingly, the core network node receives the first handover message.

Specifically, the first handover message may be a handover required message. The handover required message indicates the source RAN node to be handed over. The handover required message includes identifiers of one or more source network slice, an indication indicating whether one or more DRBs of each of the one or more source network slices support network slice re-mapping, and/or an indication DRB indicating whether one or more DRBs of each of the one or more source network slices support network slice fallback.

For specific implementation of this step, refer to the related descriptions in step S502 in the embodiment shown in FIG. 7.

S703. The core network node sends a second handover message to the target RAN node.

For example, the source RAN node determines the target RAN node in one or more RAN nodes based on signal strength measurement reports of the one or more RAN nodes neighboring to the source RAN node, where the reports are reported by the UE. The first handover message may further include an identifier of the target RAN node. The core network node sends the second handover message to the target RAN node.

Content of the second handover message includes a part or all of content of the first handover message.

Correspondingly, the target RAN node receives the second handover message.

Specifically, the second handover message may be a handover request message. The handover request message indicates that a DRB of the source RAN node is requested to be handed over to the target RAN node.

For specific implementation of this step, refer to the related descriptions in step S702 in the embodiment shown in FIG. 7.

S704. The target RAN node performs admission control based on the second handover message.

The admission control is used by the DRB to determine whether to perform network slice re-mapping on one or more DRBs, and determine an identifier of a network slice to which the one or more DRBs are re-mapped; or the admission control is used by the DRB to determine whether to fall back the one or more DRBs to a default network slice.

For specific implementation of this step, refer to the related descriptions in step S703 in the embodiment shown in FIG. 7.

S705. The target RAN node sends a second response message to the core network node.

Correspondingly, the core network node receives the second response message.

The second response message is a response message for the second handover message. Specifically, the second response message may be a handover request acknowledgement message. The handover request acknowledgement message is a response to the handover request message.

For specific implementation of this step, refer to the related descriptions in step S704 in the embodiment shown in FIG. 7.

S706. The core network node sends a first response message to the source RAN node.

Content of the first response message may include a part or all of content of the second response message.

Specifically, the second handover message may be a handover command. The handover command indicates the source RAN node to hand over the DRB to the target RAN node. Specifically, the handover command indicates the source RAN node to hand over the DRB to a network slice for re-mapping or to the default network slice.

For specific implementation of this step, refer to the related descriptions in step S704 in the embodiment shown in FIG. 7.

S707. The source RAN node sends a second message to a terminal device.

Correspondingly, the terminal device receives the second message.

For specific implementation of this step, refer to step S705 in the embodiment shown in FIG. 7.

According to the handover method provided in this embodiment of this application, during NG interface-based handover, an indication indicating whether a DRB supports network slice re-mapping and/or an indication indicating whether the DRB supports network slice fallback are/is carried in a handover message, and entire network slice re-mapping information and/or default network slice information do/does not need to be carried. Therefore, this reduces signaling overheads caused during handover interaction.

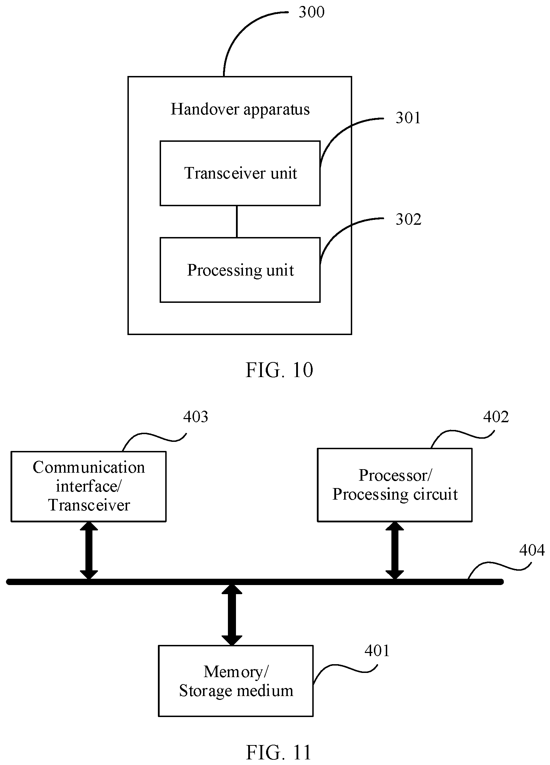

Based on a same concept as the foregoing handover methods, as shown in FIG. 10, an embodiment of this application further provides a handover apparatus. The apparatus 300 includes a transceiver unit 301 and a processing unit 302. The processing unit 302 is coupled to the transceiver unit 301.

In an embodiment, the apparatus 300 may be the terminal device in the embodiments shown in FIG. 3A and FIG. 3B and FIG. 4A and FIG. 4B.

The transceiver unit 301 is configured to receive a second message from a source RAN node.

The second message includes an identifier of at least one source network slice, an identifier of at least one protocol data unit PDU session of each of the at least one source network slice, and an identifier of a network slice to which a part or all PDU sessions of the at least one PDU session are re-mapped; or the second message includes an identifier of at least one source network slice, an identifier of at least one PDU session of each of the at least one source network slice, and an indication indicating whether a part or all PDU sessions of the at least one PDU session fall back to a default network slice.

In a possible implementation, the second message is a radio resource control RRC message, and when the at least one PDU session is re-mapped or falls back, the second message further includes a configuration parameter of a network slice to which the at least one PDU session is re-mapped or a configuration parameter of the default network slice.

The processing unit 302 is configured to: randomly access a target RAN node by using the transceiver unit 301 and communicate with the target RAN node based on the configuration parameter of the network slice to which the at least one PDU session is re-mapped.

Alternatively, the processing unit 302 is configured to: randomly access a target RAN node by using the transceiver unit 301 and communicate with the target RAN node based on the configuration parameter of the default network slice.

For specific implementations of the transceiver unit 301 and the processing unit 302, refer to the related descriptions of the terminal device in the embodiments shown in FIG. 3A and FIG. 3B and FIG. 4A and FIG. 4B.

In another embodiment, the apparatus 300 may be the terminal device in the embodiments shown in FIG. 5A and FIG. 5B and FIG. 6A and FIG. 6B.

The transceiver unit 301 is configured to receive a second message from a source RAN node.

The second message includes an identifier of at least one source network slice, an identifier of at least one QoS flow of each of the at least one source network slice, and an identifier of a network slice to which a part or all QoS flows of the at least one QoS flow are re-mapped; or the second message includes an identifier of at least one source network slice, an identifier of at least one QoS flow of each of the at least one source network slice, and an indication indicating whether a part or all QoS flows of the at least one QoS flow fall back to a default network slice.

In another possible implementation, the second message is a radio resource control RRC message, and when the at least one QoS flow is re-mapped or falls back, the second message further includes a configuration parameter of a network slice to which the at least one QoS flow is re-mapped or a configuration parameter of the default network slice.

The processing unit 302 is configured to: randomly access a target RAN node by using the transceiver unit 301 and communicate with the target RAN node based on the configuration parameter of the network slice to which the at least one QoS flow is re-mapped.

Alternatively, the processing unit 302 is configured to: randomly access a target RAN node by using the transceiver unit 301 and communicate with the target RAN node based on the configuration parameter of the default network slice.

For specific implementations of the transceiver unit 301 and the processing unit 302, refer to the related descriptions of the terminal device in the embodiments shown in FIG. 5A and FIG. 5B and FIG. 6A and FIG. 6B.

In still another embodiment, the apparatus 300 may be the terminal device in the embodiments shown in FIG. 7 to FIG. 9B.

The transceiver unit 301 is configured to receive a second message from a source RAN node.

The second message includes an identifier of at least one source network slice, an identifier of at least one DRB belonging to each of the at least one source network slice, and an identifier of a network slice to which a part or all DRBs of the at least one DRB are re-mapped; or the second message includes an identifier of at least one source network slice, an identifier of at least one DRB belonging to each of the at least one source network slice, and an indication indicating whether a part or all DRBs of the at least one DRB fall back to the default network slice.

In a possible implementation, the second message is a radio resource control RRC message, and when the at least one DRB is re-mapped or falls back, the second message further includes a configuration parameter of a network slice to which the at least one DRB is re-mapped or a configuration parameter of the default network slice.

The processing unit 302 is configured to: randomly access a target RAN node by using the transceiver unit 301 and communicate with the target RAN node based on the configuration parameter of the network slice to which the at least one DRB is re-mapped.

Alternatively, the processing unit 302 is configured to: randomly access a target RAN node by using the transceiver unit 301 and communicate with the target RAN node based on the configuration parameter of the default network slice.

For specific implementations of the transceiver unit 301 and the processing unit 302, refer to the related descriptions of the terminal device in the embodiments shown in FIG. 7 to FIG. 9B.

In still another embodiment, the apparatus 300 may alternatively be the source RAN node in the embodiments shown in FIG. 3A and FIG. 3B and FIG. 4A and FIG. 4B.

The processing unit 302 is configured to generate a first handover message, where the first handover message includes an identifier of at least one source network slice, and the first handover message further includes at least one of the following: an indication indicating whether at least one protocol data unit PDU session of each of the at least one source network slice supports network slice re-mapping, and an indication indicating whether at least one PDU session of each of the at least one source network slice supports network slice fallback.

The transceiver unit 301 is configured to send the first handover message to a first network node.

The transceiver unit 301 is further configured to receive a first response message from the first network node.

When the first handover message includes the indication indicating whether the PDU session supports network slice re-mapping, the first response message includes the identifier of the at least one source network slice, an identifier of the at least one PDU session of each of the at least one source network slice, and an identifier of a network slice to which a part or all PDU sessions of the at least one PDU session are re-mapped.

Alternatively, when the first handover message includes the indication indicating whether the PDU session supports network slice fallback, the first response message includes the identifier of the at least one source network slice, an identifier of the at least one PDU session of each of the at least one source network slice, and an indication indicating whether a part or all PDU sessions of the at least one PDU session fall back to a default network slice.

Alternatively, when the first handover message includes the indication indicating whether the PDU session supports network slice re-mapping and the indication indicating whether the PDU session supports network slice fallback, the first response message includes the identifier of the at least one source network slice, an identifier of the at least one PDU session of each of the at least one source network slice, and an identifier of a network slice to which a part or all PDU sessions of the at least one PDU session are re-mapped, or the first response message includes the identifier of the at least one source network slice, an identifier of the at least one PDU session of each of the at least one source network slice, and an indication indicating whether a part or all PDU sessions of the at least one PDU session fall back to a default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice can be correspondingly mapped, and the default network slice information includes an identifier of the default network slice.

In still another possible implementation, the transceiver unit 301 is further configured to receive a first message, where the first message includes the network slice re-mapping information and/or the default network slice information.

In a possible implementation, the transceiver unit 301 is further configured to receive, from a core network node, an establishment request for the PDU session, where the establishment request for the PDU session includes an indication indicating whether an established PDU session supports network slice re-mapping, and/or an indication indicating whether the established PDU session supports network slice fallback.

In still another possible implementation, the first network node is a target RAN node, and the transceiver unit 301 is further configured to send a handover request message to the target RAN node; and
the transceiver unit 301 is further configured to receive a handover request acknowledgement message from the target RAN node; or
the first network node is the core network node, and the transceiver unit 301 is further configured to send a handover required message to the core network node; and
the transceiver unit 301 is further configured to receive a handover command from the core network node.

In still another possible implementation, the transceiver unit 301 is further configured to send a second message to a terminal device.

The second message includes the identifier of the at least one source network slice, the identifier of the at least one PDU session of each of the at least one source network slice, and the identifier of the network slice to which a part or all PDU sessions of the at least one PDU session are re-mapped.

Alternatively, the second message includes the identifier of the at least one source network slice, the identifier of the at least one PDU session of each of the at least one source network slice, and the indication indicating whether a part or all PDU sessions of the at least one PDU session fall back to the default network slice.

Alternatively, the second message includes the identifier of the at least one source network slice, the identifier of the at least one PDU session of each of the at least one source network slice, and the identifier of the network slice to which a part or all PDU sessions of the at least one PDU session are re-mapped; or the second message includes the identifier of the at least one source network slice, the identifier of the at least one PDU session of each of the at least one source network slice, and the indication indicating whether a part or all PDU sessions of the at least one PDU session fall back to the default network slice.

For specific implementations of the transceiver unit 301 and the processing unit 302, refer to the related descriptions of the source RAN node in the embodiments shown in FIG. 3A and FIG. 3B and FIG. 4A and FIG. 4B.

In still another embodiment, the apparatus 300 may alternatively be the source RAN node in the embodiments shown in FIG. 5A and FIG. 5B and FIG. 6A and FIG. 6B.

The processing unit 302 is configured to generate a first handover message, where the first handover message includes an identifier of at least one source network slice, and the first handover message further includes at least one of the following: an indication indicating whether at least one QoS flow of each of the at least one source network slice supports network slice re-mapping, and an indication indicating whether at least one QoS flow of each of the at least one source network slice supports network slice fallback.

The transceiver unit 301 is configured to send the first handover message to a first network node.

The transceiver unit 301 is further configured to receive a first response message from the first network node.

When the first handover message includes the indication indicating whether the QoS flow supports network slice re-mapping, the first response message includes the identifier of the at least one source network slice, an identifier of the at least one QoS flow of each of the at least one source network slice, and an identifier of a network slice to which a part or all QoS flows of the at least one QoS flow are re-mapped.

Alternatively, when the first handover message includes the indication indicating whether the QoS flow supports network slice fallback, the first response message includes the identifier of the at least one source network slice, an identifier of the at least one QoS flow of each of the at least one source network slice, and an indication indicating whether a part or all QoS flows of the at least one QoS flow fall back to a default network slice.

Alternatively, when the first handover message includes the indication indicating whether the QoS flow supports network slice re-mapping and the indication indicating whether the QoS flow supports network slice fallback, the first response message includes the identifier of the at least one source network slice, an identifier of the at least one QoS flow of each of the at least one source network slice, and an identifier of a network slice to which a part or all QoS flows of the at least one QoS flow are re-mapped, or the first response message includes the identifier of the at least one source network slice, an identifier of the at least one QoS flow of each of the at least one source network slice, and an indication indicating whether a part or all QoS flows of the at least one QoS flow fall back to a default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice can be correspondingly mapped, and the default network slice information includes an identifier of the default network slice.

In still another possible implementation, the transceiver unit 301 is further configured to receive a first message, where the first message includes the network slice re-mapping information and/or the default network slice information.

In a possible implementation, the transceiver unit 301 is further configured to receive, from a core network node, an establishment request for the QoS flow, where the establishment request for the QoS flow includes an indication indicating whether an established QoS flow supports network slice re-mapping, and/or an indication indicating whether the established QoS flow supports network slice fallback.

In still another possible implementation, the first network node is a target RAN node, and the transceiver unit 301 is further configured to send a handover request message to the target RAN node; and
the transceiver unit 301 is further configured to receive a handover request acknowledgement message from the target RAN node; or
the first network node is the core network node, and the transceiver unit 301 is further configured to send a handover required message to the core network node; and
the transceiver unit 301 is further configured to receive a handover command from the core network node.

In still another possible implementation, the transceiver unit 301 is further configured to send a second message to a terminal device.

The second message includes the identifier of the at least one source network slice, the identifier of the at least one QoS flow of each of the at least one source network slice, and the identifier of the network slice to which a part or all QoS flows of the at least one QoS flow are re-mapped.

Alternatively, the second message includes the identifier of the at least one source network slice, the identifier of the at least one QoS flow of each of the at least one source network slice, and the indication indicating whether a part or all QoS flows of the at least one QoS flow fall back to the default network slice.

Alternatively, the second message includes the identifier of the at least one source network slice, the identifier of the at least one QoS flow of each of the at least one source network slice, and the identifier of the network slice to which a part or all QoS flows of the at least one QoS flow are re-mapped; or the second message includes the identifier of the at least one source network slice, the identifier of the at least one QoS flow of each of the at least one source network slice, and the indication indicating whether a part or all QoS flows of the at least one QoS flow fall back to the default network slice.

For specific implementations of the transceiver unit 301 and the processing unit 302, refer to the related descriptions of the source RAN node in the embodiments shown in FIG. 5A and FIG. 5B and FIG. 6A and FIG. 6B.

In still another embodiment, the apparatus 300 may alternatively be the source RAN node in the embodiments shown in FIG. 7 to FIG. 9B.

The processing unit 302 is configured to generate a first handover message, where the first handover message includes an identifier of at least one source network slice, and the first handover message further includes at least one of the following: an indication indicating whether at least one DRB belonging to each of the at least one source network slice supports network slice re-mapping, and an indication indicating whether at least one DRB belonging to each of the at least one source network slice supports network slice fallback.

The transceiver unit 301 is configured to send the first handover message to a first network node.

The transceiver unit 301 is further configured to receive a first response message from the first network node.

When the first handover message includes the indication indicating whether the DRB supports network slice re-mapping, the first response message includes the identifier of the at least one source network slice, an identifier of the at least one DRB belonging to each of the at least one source network slice, and an identifier of a network slice to which a part or all DRBs of the at least one DRB are re-mapped.

Alternatively, when the first handover message includes the indication indicating whether the DRB supports network slice fallback, the first response message includes the identifier of the at least one source network slice, an identifier of the at least one DRB belonging to each of the at least one source network slice, and an indication indicating whether a part or all DRBs of the at least one DRB fall back to a default network slice.

Alternatively, when the first handover message includes the indication indicating whether the DRB supports network slice re-mapping and the indication indicating whether the DRB supports network slice fallback, the first response message includes the identifier of the at least one source network slice, an identifier of the at least one DRB belonging to each of the at least one source network slice, and an identifier of a network slice to which a part or all DRBs of the at least one DRB are re-mapped, or the first response message includes the identifier of the at least one source network slice, an identifier of the at least one DRB belonging to each of the at least one source network slice, and an indication indicating whether a part or all DRBs of the at least one DRB fall back to a default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice can be correspondingly mapped, and the default network slice information includes an identifier of the default network slice.

In still another possible implementation, the transceiver unit 301 is further configured to receive a first message, where the first message includes the network slice re-mapping information and/or the default network slice information.

In still another possible implementation, the first network node is a target RAN node, and the transceiver unit 301 is further configured to send a handover request message to the target RAN node; and
the transceiver unit 301 is further configured to receive a handover request acknowledgement message from the target RAN node; or
the first network node is the core network node, and the transceiver unit 301 is further configured to send a handover required message to the core network node; and
the transceiver unit 301 is further configured to receive a handover command from the core network node.

In still another possible implementation, the transceiver unit 301 is further configured to send a second message to a terminal device.

The second message includes the identifier of the at least one source network slice, the identifier of the at least one DRB belonging to each of the at least one source network slice, and the identifier of the network slice to which a part or all DRBs of the at least one DRB are re-mapped.

Alternatively, the second message includes the identifier of the at least one source network slice, the identifier of the at least one DRB belonging to each of the at least one source network slice, and the indication indicating whether a part or all DRBs of the at least one DRB fall back to the default network slice.

Alternatively, the second message includes the identifier of the at least one source network slice, the identifier of the at least one DRB belonging to each of the at least one source network slice, and the identifier of the network slice to which a part or all DRBs of the at least one DRB are re-mapped; or the second message includes the identifier of the at least one source network slice, the identifier of the at least one DRB belonging to each of the at least one source network slice, and the indication indicating whether a part or all DRBs of the at least one DRB fall back to the default network slice.

For specific implementations of the transceiver unit 301 and the processing unit 302, refer to the related descriptions of the source RAN node in the embodiments shown in FIG. 7 to FIG. 9B.

In still another embodiment, the apparatus 300 may be the target RAN node in the embodiments shown in FIG. 3A and FIG. 3B and FIG. 4A and FIG. 4B.

The transceiver unit 301 is configured to receive a second handover message from a second network node, where the second handover message includes an identifier of at least one source network slice, and the second handover message further includes at least one of the following: an indication indicating whether at least one protocol data unit PDU session of each of the at least one source network slice supports network slice re-mapping, and an indication indicating whether at least one PDU session of each of the at least one source network slice supports network slice fallback.

The processing unit 302 is configured to perform admission control based on the second handover message, where the admission control is used to determine whether to perform network slice re-mapping on the at least one PDU session, and determine an identifier of a network slice to which the at least one PDU session is re-mapped; or the admission control is used to determine whether to fall back the at least one PDU session to a default network slice.

The transceiver unit 301 is further configured to send a second response message to the second network node.

When the second handover message includes the indication indicating whether the PDU session supports network slice re-mapping, the second response message includes the identifier of the at least one source network slice, an identifier of the at least one PDU session of each of the at least one source network slice, and an identifier of a network slice to which a part or all PDU sessions of the at least one PDU session are re-mapped.

Alternatively, when the second handover message includes the indication indicating whether the PDU session supports network slice fallback, the second response message includes the identifier of the at least one source network slice, an identifier of the at least one PDU session of each of the at least one source network slice, and an indication indicating whether a part or all PDU sessions of the at least one PDU session fall back to the default network slice.

Alternatively, when the second handover message includes the indication indicating whether the PDU session supports network slice re-mapping and the indication indicating whether the PDU session supports network slice fallback, the second response message includes the identifier of the at least one source network slice, an identifier of the at least one PDU session of each of the at least one source network slice, and an identifier of a network slice to which a part or all PDU sessions of the at least one PDU session are re-mapped, or the second response message includes the identifier of the at least one source network slice, an identifier of the at least one PDU session of each of the at least one source network slice, and an indication indicating whether a part or all PDU sessions of the at least one PDU session fall back to the default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice is correspondingly mapped, and the default network slice information includes an identifier of the default network slice.

In still another possible implementation, the transceiver unit 301 is further configured to receive a first message, where the first message includes the network slice re-mapping information and/or the default network slice information.

In still another possible implementation, the second network node is a source RAN node, and the transceiver unit 301 is further configured to receive a handover request message from the source RAN node; and
the transceiver unit 301 is further configured to send a handover request acknowledgement message to the source RAN node; or
the second network node is a core network node, and the transceiver unit 301 is further configured to receive a handover request message from the core network node; and
the transceiver unit 301 is further configured to send a handover request response message to the core network node.

In still another possible implementation, the transceiver unit 301 is further configured to send a path handover request to the core network node, where the path handover request includes an identifier of a network slice to which each of the at least one PDU session belongs, or the path handover request includes an indication indicating whether each of the at least one PDU session performs network slice fallback; and
the transceiver unit 301 is further configured to receive a path handover response from the core network node, where the path handover response includes one or more of the following information: a PDU session identifier of at least one PDU session whose path handover succeeds, a PDU session identifier of at least one PDU session whose path handover fails, and a modified context of at least one PDU session.

For specific implementations of the transceiver unit 301 and the processing unit 302, refer to the related descriptions of the target RAN node in the embodiments shown in FIG. 3A and FIG. 3B and FIG. 4A and FIG. 4B.

In still another embodiment, the apparatus 300 may be the target RAN node in the embodiments shown in FIG. 5A and FIG. 5B and FIG. 6A and FIG. 6B.

The transceiver unit 301 is configured to receive a second handover message from a second network node, where the second handover message includes an identifier of at least one source network slice, and the second handover message further includes at least one of the following: an indication indicating whether at least one QoS flow of each of the at least one source network slice supports network slice re-mapping, and an indication indicating whether at least one QoS flow of each of the at least one source network slice supports network slice fallback.

The processing unit 302 is configured to perform admission control based on the second handover message, where the admission control is used to determine whether to perform network slice re-mapping on the at least one QoS flow, and determine an identifier of a network slice to which the at least one QoS flow is re-mapped; or the admission control is used to determine whether to fall back the at least one QoS flow to a default network slice.

The transceiver unit 301 is further configured to send a second response message to the second network node.

When the second handover message includes the indication indicating whether the QoS flow supports network slice re-mapping, the second response message includes the identifier of the at least one source network slice, an identifier of the at least one QoS flow of each of the at least one source network slice, and an identifier of a network slice to which a part or all QoS flows of the at least one QoS flow are re-mapped.

Alternatively, when the second handover message includes the indication indicating whether the QoS flow supports network slice fallback, the second response message includes the identifier of the at least one source network slice, an identifier of the at least one QoS flow of each of the at least one source network slice, and an indication indicating whether a part or all QoS flows of the at least one QoS flow fall back to the default network slice.

Alternatively, when the second handover message includes the indication indicating whether the QoS flow supports network slice re-mapping and the indication indicating whether the QoS flow supports network slice fallback, the second response message includes the identifier of the at least one source network slice, an identifier of the at least one QoS flow of each of the at least one source network slice, and an identifier of a network slice to which a part or all QoS flows of the at least one QoS flow are re-mapped, or the second response message includes the identifier of the at least one source network slice, an identifier of the at least one QoS flow of each of the at least one source network slice, and an indication indicating whether a part or all QoS flows of the at least one QoS flow fall back to the default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice is correspondingly mapped, and the default network slice information includes an identifier of the default network slice.

In still another possible implementation, the transceiver unit 301 is further configured to receive a first message, where the first message includes the network slice re-mapping information and/or the default network slice information.

In still another possible implementation, the second network node is a source RAN node, and the transceiver unit 301 is further configured to receive a handover request message from the source RAN node; and
the transceiver unit 301 is further configured to send a handover request acknowledgement message to the source RAN node; or
the second network node is a core network node, and the transceiver unit 301 is further configured to receive a handover request message from the core network node; and
the transceiver unit 301 is further configured to send a handover request response message to the core network node.

In still another possible implementation, the transceiver unit 301 is further configured to send a path handover request to the core network node, where the path handover request includes an identifier of a network slice to which each of the at least one QoS flow belongs, or the path handover request includes an indication indicating whether each of the at least one QoS flow performs network slice fallback; and
the transceiver unit 301 is further configured to receive a path handover response from the core network node, where the path handover response includes one or more of the following information: a QoS flow identifier of at least one QoS flow whose path handover succeeds, a QoS flow identifier of at least one QoS flow whose path handover fails, and a modified context of at least one QoS flow.

For specific implementations of the transceiver unit 301 and the processing unit 302, refer to the related descriptions of the target RAN node in the embodiments shown in FIG. 5A and FIG. 5B and FIG. 6A and FIG. 6B.

In still another embodiment, the apparatus 300 may be the target RAN node in the embodiments shown in FIG. 7 to FIG. 9B.

The transceiver unit 301 is configured to receive a second handover message from a second network node, where the second handover message includes an identifier of at least one source network slice, and the second handover message further includes at least one of the following: an indication indicating whether at least one DRB belonging to each of the at least one source network slice supports network slice re-mapping, and an indication indicating whether at least one DRB belonging to each of the at least one source network slice supports network slice fallback.

The processing unit 302 is configured to perform admission control based on the second handover message, where the admission control is used to determine whether to perform network slice re-mapping on the at least one DRB, and determine an identifier of a network slice to which the at least one DRB is re-mapped; or the admission control is used to determine whether to fall back the at least one DRB to a default network slice.

The transceiver unit 301 is further configured to send a second response message to the second network node.

When the second handover message includes the indication indicating whether the DRB supports network slice re-mapping, the second response message includes the identifier of the at least one source network slice, an identifier of the at least one DRB belonging to each of the at least one source network slice, and an identifier of a network slice to which a part or all DRBs of the at least one DRB are re-mapped.

Alternatively, when the second handover message includes the indication indicating whether the DRB supports network slice fallback, the second response message includes the identifier of the at least one source network slice, an identifier of the at least one DRB belonging to each of the at least one source network slice, and an indication indicating whether a part or all DRBs of the at least one DRB fall back to the default network slice.

Alternatively, when the second handover message includes the indication indicating whether the DRB supports network slice re-mapping and the indication indicating whether the DRB supports network slice fallback, the second response message includes the identifier of the at least one source network slice, an identifier of the at least one DRB belonging to each of the at least one source network slice, and an identifier of a network slice to which a part or all DRBs of the at least one DRB are re-mapped, or the second response message includes the identifier of the at least one source network slice, an identifier of the at least one DRB belonging to each of the at least one source network slice, and an indication indicating whether a part or all DRBs of the at least one DRB fall back to the default network slice.

In a possible implementation, the transceiver unit 301 is further configured to obtain network slice re-mapping information and/or default network slice information, where the network slice re-mapping information includes an identifier of at least one source network slice, and an identifier of a network slice to which an identifier of each source network slice is correspondingly mapped, and the default network slice information includes an identifier of the default network slice.

In still another possible implementation, the transceiver unit 301 is further configured to receive a first message, where the first message includes the network slice re-mapping information and/or the default network slice information.

In still another possible implementation, the second network node is a source RAN node, and the transceiver unit 301 is further configured to receive a handover request message from the source RAN node; and
the transceiver unit 301 is further configured to send a handover request acknowledgement message to the source RAN node; or
the second network node is a core network node, and the transceiver unit 301 is further configured to receive a handover request message from the core network node; and
the transceiver unit 301 is further configured to send a handover request response message to the core network node.

For specific implementations of the transceiver unit 301 and the processing unit 302, refer to the related descriptions of the target RAN node in the embodiments shown in FIG. 7 to FIG. 9B.

In still another embodiment, the apparatus 300 may alternatively be the core network node in the embodiments shown in FIG. 3A and FIG. 3B and FIG. 4A and FIG. 4B.

The transceiver unit 301 is configured to receive a path handover request of a target RAN node, where the path handover request includes an identifier of a network slice to which each of at least one PDU session belongs, or the path handover request includes an indication indicating whether each of the at least one PDU session performs network slice fallback.

The processing unit 302 is configured to modify each of the at least one PDU session based on the path handover request.

The transceiver unit 301 is further configured to send a path handover response to the target RAN node, where the path handover response includes one or more of the following information: a PDU session identifier of at least one PDU session whose path handover succeeds, a PDU session identifier of at least one PDU session whose path handover fails, and a modified context of at least one PDU session.

For specific implementations of the transceiver unit 301 and the processing unit 302, refer to the related descriptions of the core network node in the embodiments shown in FIG. 3A and FIG. 3B and FIG. 4A and FIG. 4B.

In still another embodiment, the apparatus 300 may alternatively be the core network node in the embodiments shown in FIG. 5A and FIG. 5B and FIG. 6A and FIG. 6B.

The transceiver unit 301 is configured to receive a path handover request of a target RAN node, where the path handover request includes an identifier of a network slice to which each of at least one QoS flow belongs, or the path handover request includes an indication indicating whether each of the at least one QoS flow performs network slice fallback.

The processing unit 302 is configured to modify each of the at least one QoS flow based on the path handover request.

The transceiver unit 301 is further configured to send a path handover response to the target RAN node, where the path handover response includes one or more of the following information: a QoS flow identifier of at least one QoS flow whose path handover succeeds, a QoS flow identifier of at least one QoS flow whose path handover fails, and a modified context of at least one QoS flow.

For specific implementations of the transceiver unit 301 and the processing unit 302, refer to the related descriptions of the core network node in the embodiments shown in FIG. 5A and FIG. 5B and FIG. 6A and FIG. 6B.

FIG. 11 is a structural diagram of a possible product form of a handover apparatus according to an embodiment of this application.

In an embodiment, the handover apparatus is a terminal device.

In a possible product form, the handover apparatus may be an information transmission device, where the information transmission device includes a transceiver 403. The transceiver 403 is configured to support the information transmission device in performing step S105 in the embodiment shown in FIG. 3B, the transceiver 403 is configured to support the information transmission device in performing step S207 in the embodiment shown in FIG. 4B, the transceiver 403 is configured to support the information transmission device in performing step S305 in the embodiment shown in FIG. 5B, the transceiver 403 is configured to support the information transmission device in performing step S407 in the embodiment shown in FIG. 6B, the transceiver 403 is configured to support the information transmission device in performing step S505 in the embodiment shown in FIG. 3, the transceiver 403 is configured to support the information transmission device in performing step S707 in the embodiment shown in FIG. 9B, or the transceiver 403 is further configured to support the information transmission device in randomly accessing a target RAN node and communicating with the target RAN node based on a configuration parameter of a network slice to which at least one PDU session is re-mapped or a configuration parameter of a default network slice. Optionally, the information transmission device may further include a memory 401 and a processor 402.

In another possible product form, the handover apparatus may be an information transmission board, where the information transmission board includes a transceiver 403. The transceiver 403 is configured to support the information transmission board in performing step S105 in the embodiment shown in FIG. 3B, the transceiver 403 is configured to support the information transmission board in performing step S207 in the embodiment shown in FIG. 4B, the transceiver 403 is configured to support the information transmission board in performing step S305 in the embodiment shown in FIG. 5B, the transceiver 403 is configured to support the information transmission board in performing step S407 in the embodiment shown in FIG. 6B, the transceiver 403 is configured to support the information transmission board in performing step S505 in the embodiment shown in FIG. 3, the transceiver 403 is configured to support the information transmission board in performing step S707 in the embodiment shown in FIG. 9B, or the transceiver 403 is further configured to support the information transmission board in randomly accessing a target RAN node and communicating with the target RAN node based on a configuration parameter of a network slice to which at least one PDU session is re-mapped or a configuration parameter of a default network slice. Optionally, the information transmission board may further include a memory 401 and a processor 402.

In still another possible product form, the handover apparatus is alternatively implemented by a general-purpose processor, that is, implemented by a commonly called chip. The general-purpose processor includes: a processing circuit 402 and a communication interface 403. Optionally, the general-purpose processor may further include a storage medium 401.

In another possible product form, the communication apparatus may alternatively be implemented by using the following: one or more field programmable gate arrays (field programmable gate arrays, FPGAs), a programmable logic device (programmable logic device, PLD), a controller, a state machine, a logic gate, a discrete hardware component, any other suitable circuit, or any combination of circuits that can perform various functions described throughout this application.

In another embodiment, the handover apparatus is a source RAN node.

In a possible product form, the handover apparatus may be an information transmission device, where the information transmission device includes a transceiver 403. The transceiver 403 is configured to support the information transmission device in performing steps S101, S102, S104, and S105 in the embodiment shown in FIG. 3B, the transceiver 403 is configured to support the information transmission device in performing steps S201, S202, S206, and S207 in the embodiment shown in FIG. 4A and FIG. 4B, the transceiver 403 is configured to support the information transmission device in performing steps S301, S302, S304, and S305 in the embodiment shown in FIG. 5A and FIG. 5B, the transceiver 403 is configured to support the information transmission device in performing steps S401, S402, S406, and S407 in the embodiment shown in FIG. 6A and FIG. 6B, the transceiver 403 is configured to support the information transmission device in performing steps S501, S502, S504, and S505 in the embodiment shown in FIG. 7, or the transceiver 403 is configured to support the information transmission device in performing steps S701, S702, S706, and S707 in the embodiment shown in FIG. 9A and FIG. 9B. Optionally, the information transmission device may further include a memory 401 and a processor 402.

In another possible product form, the handover apparatus may be an information transmission board, where the information transmission board includes a transceiver 403. The transceiver 403 is configured to support the information transmission board in performing steps S101, S102, S104, and S105 in the embodiment shown in FIG. 3A and FIG. 3B, the transceiver 403 is configured to support the information transmission board in performing steps S201, S202, S206, and S207 in the embodiment shown in FIG. 4A and FIG. 4B, the transceiver 403 is configured to support the information transmission board in performing steps S301, S302, S304, and S305 in the embodiment shown in FIG. 5A and FIG. 5B, the transceiver 403 is configured to support the information transmission board in performing steps S401, S402, S406, and S407 in the embodiment shown in FIG. 6A and FIG. 6B, the transceiver 403 is configured to support the information transmission board in performing steps S501, S502, S504, and S505 in the embodiment shown in FIG. 7, or the transceiver 403 is configured to support the information transmission board in performing steps S701, S702, S706, and S707 in the embodiment shown in FIG. 9A and FIG. 9B. Optionally, the information transmission board may further include a memory 401 and a processor 402.

In still another possible product form, the handover apparatus is alternatively implemented by a general-purpose processor, that is, implemented by a commonly called chip. The general-purpose processor includes: a processing circuit 402 and a communication interface 403. Optionally, the general-purpose processor may further include a storage medium 401.

In another possible product form, the communication apparatus may alternatively be implemented by using the following: one or more FPGAs, a PLD, a controller, a state machine, a logic gate, a discrete hardware component, any other proper circuit, or any combination of circuits that can perform various functions described in this application.

In still another embodiment, the handover apparatus is a target RAN node.

In a possible product form, the handover apparatus may be an information transmission device, where the information transmission device includes a processor 402 and a transceiver 403. The processor 402 is configured to control and manage an action of the information transmission device. For example, the processor 402 is configured to support the information transmission device in performing step S103 in the embodiment shown in FIG. 3B, configured to support the information transmission device in performing step S204 in the embodiment shown in FIG. 4B, configured to support the information transmission device in performing step S303 in the embodiment shown in FIG. 5A, configured to support the information transmission device in performing step S404 in the embodiment shown in FIG. 6B, configured to support the information transmission device in performing step S503 in the embodiment shown in FIG. 7, or configured to support the information transmission device in performing step S704 in the embodiment shown in FIG. 9B. The transceiver 403 is configured to support the information transmission device in performing steps S101, S102, S104, S106, and S107 in the embodiment shown in FIG. 3B, the transceiver 403 is configured to support the information transmission device in performing steps S201, S203, and S205 in the embodiment shown in FIG. 4A and FIG. 4B, the transceiver 403 is configured to support the information transmission device in performing steps S301, S302, S304, S306, and S307 in the embodiment shown in FIG. 5A and FIG. 5B, the transceiver 403 is configured to support the information transmission device in performing steps S401, S403, and S405 in the embodiment shown in FIG. 6A and FIG. 6B, the transceiver 403 is configured to support the information transmission device in performing steps S501, S502, and S504 in the embodiment shown in FIG. 7, or the transceiver 403 is configured to support the information transmission device in performing steps S701, S703, and S705 in the embodiment shown in FIG. 9A and FIG. 9B. Optionally, the information transmission device may further include a memory 401.

In another possible product form, the handover apparatus may be an information transmission board, where the information transmission board includes a processor 402 and a transceiver 403. The processor 402 is configured to control and manage an action of the information transmission board. For example, the processor 402 is configured to support the information transmission board in performing step S103 in the embodiment shown in FIG. 3A, configured to support the information transmission board in performing step S204 in the embodiment shown in FIG. 4B, configured to support the information transmission board in performing step S303 in the embodiment shown in FIG. 5A, configured to support the information transmission board in performing step S404 in the embodiment shown in FIG. 6B, configured to support the information transmission board in performing step S503 in the embodiment shown in FIG. 7, or configured to support the information transmission board in performing step S704 in the embodiment shown in FIG. 9B. The transceiver 403 is configured to support the information transmission device in performing steps S101, S102, S104, S106, and S107 in the embodiment shown in FIG. 3A and FIG. 3B, the transceiver 403 is configured to support the information transmission device in performing steps S201, S203, and S205 in the embodiment shown in FIG. 4A and FIG. 4B, the transceiver 403 is configured to support the information transmission device in performing steps S301, S302, S304, S306, and S307 in the embodiment shown in FIG. 5A and FIG. 5B, the transceiver 403 is configured to support the information transmission device in performing steps S401, S403, and S405 in the embodiment shown in FIG. 6A and FIG. 6B, the transceiver 403 is configured to support the information transmission device in performing steps S501, S502, and S504 in the embodiment shown in FIG. 7, or the transceiver 403 is configured to support the information transmission device in performing steps S701, S703, and S705 in the embodiment shown in FIG. 9A and FIG. 9B. Optionally, the information transmission board may further include a memory 401.

In still another possible product form, the handover apparatus is alternatively implemented by a general-purpose processor, that is, implemented by a commonly called chip. The general-purpose processor includes: a processing circuit 402 and a communication interface 403. Optionally, the general-purpose processor may further include a storage medium 401.

In another possible product form, the communication apparatus may alternatively be implemented by using the following: one or more FPGAs, a PLD, a controller, a state machine, a logic gate, a discrete hardware component, any other proper circuit, or any combination of circuits that can perform various functions described in this application.

In another embodiment, the handover apparatus is a core network node.

In a possible product form, the handover apparatus may be an information transmission device, where the information transmission device includes a transceiver 403. The transceiver 403 is configured to support the information transmission device in performing steps S106 and S107 in the embodiment shown in FIG. 3B, the transceiver 403 is configured to support the information transmission device in performing steps S202, S203, S205, and S206 in the embodiment shown in FIG. 4A and FIG. 4B, the transceiver 403 is configured to support the information transmission device in performing steps S306 and S307 in the embodiment shown in FIG. 5B, the transceiver 403 is configured to support the information transmission device in performing steps S402, S403, S405, and S406 in the embodiment shown in FIG. 6A and FIG. 6B, or the transceiver 403 is configured to support the information transmission device in performing steps S702, S703, S705, and S706 in the embodiment shown in FIG. 9A and FIG. 9B. Optionally, the information transmission device may further include a memory 401 and a processor 402.

In another possible product form, the handover apparatus may be an information transmission board, where the information transmission board includes a transceiver 403. The transceiver 403 is configured to support the information transmission board in performing steps S106 and S107 in the embodiment shown in FIG. 3B, the transceiver 403 is configured to support the information transmission board in performing steps S202, S203, S205, and S206 in the embodiment shown in FIG. 4A and FIG. 4B, the transceiver 403 is configured to support the information transmission board in performing steps S306 and S307 in the embodiment shown in FIG. 5B, the transceiver 403 is configured to support the information transmission board in performing steps S402, S403, S405, and S406 in the embodiment shown in FIG. 6A and FIG. 6B, or the transceiver 403 is configured to support the information transmission board in performing steps S702, S703, S705, and S706 in the embodiment shown in FIG. 9A and FIG. 9B. Optionally, the information transmission board may further include a memory 401 and a processor 402.

In still another possible product form, the handover apparatus is alternatively implemented by a general-purpose processor, that is, implemented by a commonly called chip. The general-purpose processor includes: a processing circuit 402 and a communication interface 403. Optionally, the general-purpose processor may further include a storage medium 401.

In another possible product form, the communication apparatus may alternatively be implemented by using the following: one or more FPGAs, a PLD, a controller, a state machine, a logic gate, a discrete hardware component, any other proper circuit, or any combination of circuits that can perform various functions described in this application.

The processor 402 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 404 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

Optionally, an embodiment of this application further provides a chip system, including at least one processor and an interface. The at least one processor is coupled to a memory through the interface. When the at least one processor executes a computer program or instructions in the memory, the method according to any one of the foregoing method embodiments is performed. Optionally, the chip system may include a chip, or may include a chip and another discrete component. This is not specifically limited in this embodiment of this application.

Optionally, an embodiment of this application further provides a computer-readable storage medium. The computer-readable storage medium stores a computer program. When the computer program is executed by a handover apparatus, the handover apparatus is enabled to perform the method according to any one of the foregoing method embodiments.

Optionally, an embodiment of this application further provides a computer program product including instructions. When the instructions are executed by a computer, a handover apparatus is enabled to perform the method according to any one of the foregoing method embodiments.

Optionally, an embodiment of this application further provides a communication system. The communication system includes the foregoing handover apparatus.

It may be understood that, in the foregoing embodiments, the methods and/or steps implemented by the terminal device may alternatively be implemented by a component (for example, a chip or a circuit) that can be used for the terminal device; the methods and/or steps implemented by the source RAN node may alternatively be implemented by a component (for example, a chip or a circuit) that can be used for the source RAN node; and the methods and/or steps implemented by the target RAN node may alternatively be implemented by a component (for example, a chip or a circuit) that can be used for the target RAN node.

The foregoing mainly describes the solutions provided in embodiments of this application from a perspective of interaction between network elements. Correspondingly, an embodiment of this application further provides a handover apparatus, and the handover apparatus is configured to implement the foregoing methods. The handover apparatus may be the terminal device in the foregoing method embodiments, an apparatus including the foregoing terminal device, or a component that can be used for the terminal device. Alternatively, the handover apparatus may be the source RAN node in the foregoing method embodiments, an apparatus including the foregoing source RAN node, or a component that can be used for the source RAN node. Alternatively, the handover apparatus may be the target RAN node in the foregoing method embodiments, an apparatus including the foregoing target RAN node, or a component that can be used for the target RAN node. It may be understood that, to implement the foregoing functions, the handover apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement a described function for each particular application, but it should not be considered that the implementation goes beyond the scope of this application provided that it falls within the scope of the claims.

In embodiments of this application, the handover apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be noted that the foregoing units or one or more of the units may be implemented by using software, hardware, or a combination thereof. When any one of the units or the units is implemented by using the software, the software exists in a form of computer program instructions, and is stored in the memory. The processor may be configured to execute the program instructions and implement the foregoing method procedures. The processor may be built in a system on chip (system on chip, SoC) or an ASIC, or may be an independent semiconductor chip. In addition to a core for executing software instructions to perform operations or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units are implemented by using the hardware, the hardware may be any one or any combination of a central processing unit (central processing unit, CPU), a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A handover method, wherein the method comprises:
receiving (S203), by a target radio access network RAN node, a handover message from a network node, wherein the handover message comprises an identifier of at least one source network slice, and the handover message further comprises at least one of the following: an indication indicating whether at least one protocol data unit PDU session of each of the at least one source network slice supports network slice re-mapping, and an indication indicating whether at least one PDU session of each of the at least one source network slice supports network slice fallback;
performing (S204), by the target RAN node, admission control based on the handover message, wherein the admission control is used to determine whether to perform network slice re-mapping on the at least one PDU session, and determine an identifier of a network slice to which the at least one PDU session is re-mapped; or the admission control is used to determine whether to fall back the at least one PDU session to a default network slice; and
sending (S205), by the target RAN node, a response message to the network node, wherein
when the handover message comprises the indication indicating whether the PDU session supports network slice re-mapping, the response message comprises the identifier of the at least one source network slice, an identifier of the at least one PDU session of each of the at least one source network slice, and an identifier of a network slice to which a part or all PDU sessions of the at least one PDU session are re-mapped;
when the handover message comprises the indication indicating whether the PDU session supports network slice fallback, the response message comprises the identifier of the at least one source network slice, an identifier of the at least one PDU session of each of the at least one source network slice, and an indication indicating whether a part or all PDU sessions of the at least one PDU session fall back to the default network slice; or
when the handover message comprises the indication indicating whether the PDU session supports network slice re-mapping and the indication indicating whether the PDU session supports network slice fallback, the second response message comprises the identifier of the at least one source network slice, an identifier of the at least one PDU session of each of the at least one source network slice, and an identifier of a network slice to which a part or all PDU sessions of the at least one PDU session are re-mapped, or the second response message comprises the identifier of the at least one source network slice, an identifier of the at least one PDU session of each of the at least one source network slice, and an indication indicating whether a part or all PDU sessions of the at least one PDU session fall back to the default network slice.

2. The method according to claim 1, wherein the method further comprises:
obtaining (S301), by the target RAN node, network slice re-mapping information and/or default network slice information, wherein the network slice re-mapping information comprises an identifier of at least one source network slice, and an identifier of a network slice to which an identifier of each source network slice is correspondingly mapped, and the default network slice information comprises an identifier of the default network slice.

3. The method according to claim 2, wherein the obtaining (S301), by the target RAN node, network slice re-mapping information and/or default network slice information comprises:
receiving, by the target RAN node, a first message, wherein the first message comprises the network slice re-mapping information and/or the default network slice information.

4. A handover apparatus associated with a target radio access network RAN node, comprising a processor, configured to execute a program stored in a memory, wherein when the program is executed, the handover apparatus is configured to perform the method according to any one of claims 1 to 3.

5. The handover apparatus according to claim 4, wherein the memory is located outside the handover apparatus.

6. A computer-readable storage medium, storing a computer program, wherein when the computer program is run on a computer associated with a target radio access network RAN node, it causes the target RAN node to perform the method according to any one of claims 1 to 3

7. A computer program, wherein when the computer program runs on a computer associated with a target radio access network RAN node, it causes the target RAN node to perform the method according to any one of claims 1 to 3

## Patentansprüche

1. Übergabeverfahren, wobei das Verfahren Folgendes umfasst:
Empfangen (S203), durch einen Zielfunkzugriffsnetzknoten, Ziel-RAN-Knoten, einer Übergabenachricht von einem Netzknoten, wobei die Übergabenachricht eine Kennung mindestens eines Quellnetz-Slices umfasst und die Übergabenachricht ferner mindestens eine von Folgendem umfasst: einer Angabe, die angibt, ob mindestens eine Protokolldateneinheitssitzung, PDU-Sitzung, jedes des mindestens einen Quellnetz-Slices ein erneutes Mapping von Netz-Slices unterstützt oder nicht unterstützt, und einer Angabe, die angibt, ob mindestens eine PDU-Sitzung jedes des mindestens einen Quellnetz-Slices ein Ausweichen auf Netz-Slices unterstützt oder nicht unterstützt;
Durchführen (S204), durch den Ziel-RAN-Knoten, einer Zugangssteuerung basierend auf der Übergabenachricht, wobei die Zugangssteuerung dazu verwendet wird, zu bestimmen, das erneute Mapping von Netz-Slices an der mindestens einen PDU-Sitzung durchzuführen oder nicht durchzuführen, und eine Kennung eines Netz-Slices zu bestimmen, zu dem die mindestens eine PDU-Sitzung erneut gemappt wird; oder die Zugangssteuerung dazu verwendet wird, zu bestimmen, die mindestens eine PDU-Sitzung auf einen standardmäßigen Netz-Slice ausweichen oder nicht ausweichen zu lassen; und
Senden (S205) durch den Ziel-RAN-Knoten, einer Antwortnachricht an den Netzknoten, wobei
wenn die Übergabenachricht die Angabe umfasst, die angibt, ob die PDU-Sitzung das erneute Mapping von Netz-Slices unterstützt oder nicht unterstützt, die Antwortnachricht die Kennung des mindestens einen Quellnetz-Slices, eine Kennung der mindestens einen PDU-Sitzung jedes des mindestens einen Quellnetz-Slices und eine Kennung eines Netz-Slices, zu dem ein Teil der oder alle PDU-Sitzungen der mindestens einen PDU-Sitzung erneut gemappt werden, umfasst;
wenn die Übergabenachricht die Angabe umfasst, die angibt, ob die PDU-Sitzung das Ausweichen auf Netz-Slices unterstützt oder nicht unterstützt, die Antwortnachricht die Kennung des mindestens einen Quellnetz-Slices, eine Kennung der mindestens einen PDU-Sitzung jedes des mindestens einen Quellnetz-Slices und eine Angabe, die angibt, ob ein Teil der oder alle PDU-Sitzungen der mindestens einen PDU-Sitzung auf den standardmäßigen Netz-Slice ausweichen oder nicht ausweichen, umfasst; oder
wenn die Übergabenachricht die Angabe, die angibt, ob die PDU-Sitzung das erneute Mapping von Netz-Slices unterstützt oder nicht unterstützt, und die Angabe, die angibt, ob die PDU-Sitzung das Ausweichen auf Netz-Slices unterstützt oder nicht unterstützt, umfasst, die zweite Antwortnachricht die Kennung des mindestens einen Quellnetz-Slices, eine Kennung der mindestens einen PDU-Sitzung jedes des mindestens einen Quellnetz-Slices und eine Kennung eines Netz-Slices, zu dem ein Teil der oder alle PDU-Sitzungen der mindestens einen PDU-Sitzung erneut gemappt werden, umfasst oder die zweite Antwortnachricht die Kennung des mindestens einen Quellnetz-Slices, eine Kennung der mindestens einen PDU-Sitzung jedes des mindestens einen Quellnetz-Slices und eine Angabe, die angibt, ob ein Teil der oder alle PDU-Sitzungen der mindestens einen PDU-Sitzung auf den standardmäßigen Netz-Slice ausweichen oder nicht ausweichen, umfasst.

2. Verfahren nach Anspruch 1, wobei das Verfahren ferner Folgendes umfasst:
Erlangen (S301), durch den Ziel-RAN-Knoten, von Informationen zum erneuten Mapping von Netz-Slices und/oder Informationen zum standardmäßigen Netz-Slice, wobei die Informationen zum erneuten Mapping von Netz-Slices eine Kennung mindestens eines Quellnetz-Slices und eine Kennung eines Netz-Slices, zu dem eine Kennung jedes Quellnetz-Slices entsprechend gemappt wird, umfassen und die Informationen zum standardmäßigen Netz-Slice eine Kennung des standardmäßigen Netz-Slices umfassen.

3. Verfahren nach Anspruch 2, wobei das Erlangen (S301), durch den Ziel-RAN-Knoten, von Informationen zum erneuten Mapping von Netz-Slices und/oder Informationen zum standardmäßigen Netz-Slice Folgendes umfasst:
Empfangen, durch den Ziel-RAN-Knoten, einer ersten Nachricht, wobei die erste Nachricht die Informationen zum erneuten Mapping von Netz-Slices und/oder die Informationen zum standardmäßigen Netz-Slice umfasst.

4. Übergabevorrichtung, die einem Zielfunkzugriffsnetzknoten, Ziel-RAN-Knoten, zugeordnet ist,
umfassend einen Prozessor, der dazu konfiguriert, ein Programm auszuführen, das in einem Speicher gespeichert ist, wobei, wenn das Programm ausgeführt wird, die Übergabevorrichtung dazu konfiguriert ist, das Verfahren nach einem der Ansprüche 1 bis 3 durchzuführen.

5. Übergabevorrichtung nach Anspruch 4, wobei sich der Speicher außerhalb der Übergabevorrichtung befindet.

6. Computerlesbares Speichermedium, das ein Computerprogramm speichert, wobei, wenn das Computerprogramm auf einem Computer ausgeführt wird, der einem Zielfunkzugriffsnetzknoten, Ziel-RAN-Knoten, zugeordnet ist, es den Ziel-RAN-Knoten dazu veranlasst, das Verfahren nach einem der Ansprüche 1 bis 3 durchzuführen.

7. Computerprogramm, wobei, wenn das Computerprogramm auf einem Computer läuft, der einem Zielfunkzugriffsnetzknoten, Ziel-RAN-Knoten, zugeordnet ist, es den Ziel-RAN-Knoten dazu veranlasst, das Verfahren nach einem der Ansprüche 1 bis 3 durchzuführen.

## Revendications

1. Procédé de transfert, dans lequel le procédé comprend :
la réception (S203), par un nœud de réseau d'accès radio, RAN, cible, d'un message de transfert provenant d'un nœud de réseau, dans lequel le message de transfert comprend un identifiant d'au moins une tranche de réseau source, et le message de transfert comprend également au moins un des éléments suivants : une indication indiquant si au moins une session d'unité de données de protocole, PDU, de chacune de l'au moins une tranche de réseau source prend en charge le remappage de tranche de réseau, et une indication indiquant si au moins une session de PDU de chacune de l'au moins une tranche de réseau source prend en charge le repli de tranche de réseau ;
la réalisation (S204), par le nœud RAN cible, d'une commande d'admission sur la base du message de transfert, dans lequel la commande d'admission est utilisée pour déterminer s'il faut réaliser un remappage de tranche de réseau sur l'au moins une session de PDU, et déterminer un identifiant d'une tranche de réseau sur laquelle l'au moins une session de PDU est remappée ;
ou la commande d'admission est utilisé pour déterminer s'il faut replier l'au moins une session de PDU vers une tranche de réseau par défaut ; et
l'envoi (S205), par le nœud RAN cible, d'un message de réponse au nœud de réseau, dans lequel
lorsque le message de transfert comprend l'indication indiquant si la session de PDU prend en charge le remappage de tranche de réseau, le message de réponse comprend l'identifiant de l'au moins une tranche de réseau source, un identifiant de l'au moins une session de PDU de chacune de l'au moins une tranche de réseau source, et un identifiant d'une tranche de réseau vers laquelle une partie ou la totalité des sessions de PDU de l'au moins une session de PDU sont remappées ;
lorsque le message de transfert comprend l'indication indiquant si la session de PDU prend en charge le repli de tranche de réseau, le message de réponse comprend l'identifiant de l'au moins une tranche de réseau source, un identifiant de l'au moins une session de PDU de chacune de l'au moins une tranche de réseau source, et une indication indiquant si une partie ou la totalité des sessions de PDU de l'au moins une session de PDU se replient vers la tranche de réseau par défaut ; ou
lorsque le message de transfert comprend l'indication indiquant si la session de PDU prend en charge le remappage de tranche de réseau et l'indication indiquant si la session de PDU prend en charge le repli de tranche de réseau, le second message de réponse comprend l'identifiant de l'au moins une tranche de réseau source, un identifiant de l'au moins une session de PDU de chacune de l'au moins une tranche de réseau source, et un identifiant d'une tranche de réseau vers laquelle une partie ou la totalité des sessions de PDU de l'au moins une session de PDU sont remappées, ou le second message de réponse comprend l'identifiant de l'au moins une tranche de réseau source, un identifiant de l'au moins une session de PDU de chacune de l'au moins une tranche de réseau source, et une indication indiquant si une partie ou la totalité des sessions de PDU de l'au moins une session de PDU se replient vers la tranche de réseau par défaut.

2. Procédé selon la revendication 1, dans lequel le procédé comprend également :
l'obtention (S301), par le nœud RAN cible, d'informations de remappage de tranche de réseau et/ou d'informations de tranche de réseau par défaut, dans lequel les informations de remappage de tranche de réseau comprennent un identifiant d'au moins une tranche de réseau source, et un identifiant d'une tranche de réseau à laquelle un identifiant de chaque tranche de réseau source est mappé de manière correspondante, et les informations de tranche de réseau par défaut comprennent un identifiant de la tranche de réseau par défaut.

3. Procédé selon la revendication 2, dans lequel l'obtention (S301), par le nœud RAN cible, d'informations de remappage de tranche de réseau et/ou d'informations de tranche de réseau par défaut comprend :
la réception, par le nœud RAN cible, d'un premier message, dans lequel le premier message comprend les informations de remappage de tranche de réseau et/ou les informations de tranche de réseau par défaut.

4. Appareil de transfert associé à un nœud RAN de réseau d'accès radio cible,
comprenant un processeur, configuré pour exécuter un programme stocké dans une mémoire, dans lequel lorsque le programme est exécuté, l'appareil de transfert est configuré pour réaliser le procédé selon l'une quelconque des revendications 1 à 3.

5. Appareil de transfert selon la revendication 4, dans lequel la mémoire est située à l'extérieur de l'appareil de transfert.

6. Support de stockage lisible par ordinateur, stockant un programme informatique, dans lequel, lorsque le programme informatique est mis en œuvre sur un ordinateur associé à nœud de réseau d'accès radio cible RAN, il amène le nœud RAN à réaliser le procédé selon l'une quelconque des revendications 1 à 3.

7. Programme informatique, dans lequel, lorsque le programme informatique est mis en œuvre sur un ordinateur associé à nœud de réseau d'accès radio cible RAN, il amène le nœud RAN à réaliser le procédé selon l'une quelconque des revendications 1 à 3.
